# EUROPEAN PATENT APPLICATION

(11) **EP 4 852 476 A1**
(43) Date of publication of application: **09.12.2026**
(21) Application number: 24920842.2
(22) Date of filing: 30.01.2024
(51) Int. Cl.: H04W 8/02

(54) **METHOD FOR WIRELESS COMMUNICATION AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Taor, Simon Edward William
(86) International application number: PCT/CN2024/074779
(87) International publication number: WO 2025/160767

(57) **Abstract**

A method for wireless communication and a communication device are provided. The method comprises: a terminal device sends a first message to a first network element. The first message comprises a first identifier, an identifier of the terminal device corresponds to one or more user identifiers, and the first identifier is one of the one or more user identifiers. According to embodiments of the present application, a first identifier is introduced, so that a core network is able to identify a user corresponding to the first identifier, thereby achieving user-granular registration, authentication, or policy configuration.

## Description

### TECHNICAL FIELD

The present disclosure relates to the technical field of communication, and more particularly to a method for wireless communication and a communication device.

### BACKGROUND

In the related art, the terminal device accesses a 3rd generation partnership project (3GPP) core network based on the identifier of the terminal device for registration, authentication, policy configuration, or the like. In some scenarios, the same terminal device may be used by multiple users. Different users may require different services. However, in the present technologies, the core network cannot recognize different users of the same terminal device, and thus, registration, authentication, policy configuration, or the like cannot be performed for different users.

### SUMMARY

The present disclosure provides a method for wireless communication and a communication device. Various aspects of the present disclosure are described below.

In a first aspect, a method for wireless communication is provided, the method includes: a terminal device sends a first message to a first network element, the first message including a first identifier, an identifier of the terminal device corresponding to one or more user identifiers, and the first identifier being one of the one or more user identifiers.

In a second aspect, a method for wireless communication is provided, the method includes: a first network element receives a first message from a terminal device, the first message including a first identifier, an identifier of the terminal device corresponding to one or more user identifiers, and the first identifier being one of the one or more user identifiers.

In a third aspect, a method for wireless communication is provided, the method includes: a second network element receives a sixth message from a first network element, the sixth message being used to request the second network element to authenticate a first identifier, and the first identifier being one of one or more user identifiers corresponding to an identifier of the terminal device.

In a fourth aspect, a method for wireless communication is provided, the method includes: a third network element receives a seventh message from a first network element, the seventh message being used to determine a policy corresponding to a first identifier, an identifier of the terminal device corresponding to one or more user identifiers, and the first identifier being one of the one or more user identifiers.

In a fifth aspect, a method for wireless communication is provided, the method includes: a fourth network element receives an eighth message from a first network element, the eighth message being used to determine subscription information corresponding to a first identifier, an identifier of the terminal device corresponding to one or more user identifiers, and the first identifier being one of the one or more user identifiers.

In a sixth aspect, a terminal device is provided, which includes: a sending unit, configured to send a first message to a first network element, the first message including a first identifier, an identifier of the terminal device corresponding to one or more user identifiers, and the first identifier being one of the one or more user identifiers.

In a seventh aspect, a communication device is provided, which is the first network element and includes: a receiving unit, configured to receive a first message from a terminal device, the first message including a first identifier, an identifier of the terminal device corresponding to one or more user identifiers, and the first identifier being one of the one or more user identifiers.

In an eighth aspect, a communication device is provided, which is a second network element and includes: a receiving unit, configured to receive a sixth message from a first network element, the sixth message being used to request the second network element to authenticate a first identifier, and the first identifier being one of one or more user identifiers corresponding to an identifier of the terminal device.

In a ninth aspect, a communication device is provided, which is a third network element and includes: a receiving unit, configured to receive a seventh message from a first network element, the seventh message being used to determine a policy corresponding to a first identifier, an identifier of the terminal device corresponding to one or more user identifiers, and the first identifier being one of the one or more user identifiers.

In a tenth aspect, a communication device is provided, which is a fourth network element and includes: a receiving unit, configured to receive an eighth message from a first network element, the eighth message being used to determine subscription information corresponding to a first identifier, an identifier of the terminal device corresponding to one or more user identifiers, and the first identifier being one of the one or more user identifiers.

In an eleventh aspect, there is provided a communication device including a processor, a memory, and a communication interface. The memory is configured to store one or more computer programs, the processor is configured to invoke the computer programs in the memory, to cause the communication device to perform some or all of the operations in the methods of the above aspects.

In a twelfth aspect, there is provided a chip including a processor that can invoke a program in a memory to cause a device installed with the chip to perform some or all of the operations described in the methods of the above aspects.

In a thirteenth aspect, there is provided a computer-readable storage medium storing a computer program that causes a communication device to perform some or all of the operations in the methods of the above aspects.

In a fourteenth aspect, there is provided a computer program product, where the computer program product includes a non-transitory computer-readable storage medium storing a computer program operable to cause a communication device to perform some or all of the operations in the methods of the above aspects. In some implementations, the computer program product may be a software installation package.

In a fifteenth aspect, there is provided a computer program that causes a computer to perform some or all of the operations in the methods of the above aspects of embodiments of the present disclosure.

The embodiment of the present disclosure introduces a first identifier, where the identifier of the terminal device corresponds to one or more user identifiers, and the first identifier is one of the one or more user identifiers, so that the terminal device can send a first message including the first identifier to a network element, so that the core network can identify the user corresponding to the first identifier, thereby enabling user-granularity registration, authentication, or policy configuration, etc.

### BRIEF DESCRIPTION OF THE DRAWINGS

FIG. 1 is a schematic diagram of a wireless communication system according to an embodiment of the present disclosure.
FIG. 2 is a flowchart of a UE policy configuration process according to an embodiment of the present disclosure.
FIG. 3a is a schematic diagram of a usage scenario according to an embodiment of the present disclosure.
FIG. 3b is a schematic diagram of another usage scenario according to an embodiment of the present disclosure.
FIG. 3c is a schematic diagram of yet another usage scenario according to an embodiment of the present disclosure.
FIG. 4 is a schematic flowchart of a method for wireless communication according to an embodiment of the present disclosure.
FIG. 5 is a schematic flowchart of a method for wireless communication according to another embodiment of the present disclosure.
FIG. 6 is a schematic flowchart of a method for wireless communication according to yet another embodiment of the present disclosure.
FIG. 7 is a schematic flowchart of a method for wireless communication according to another embodiment of the present disclosure.
FIG. 8 is a schematic flowchart of a method for wireless communication according to yet another embodiment of the present disclosure.
FIG. 9 is a schematic flowchart of a method for wireless communication according to yet another embodiment of the present disclosure.
FIG. 10 is a schematic flowchart of a method for wireless communication according to yet another embodiment of the present disclosure.
FIG. 11 is a schematic structural diagram of a terminal device according to an embodiment of the present disclosure.
FIG. 12 is a schematic structural diagram of a communication device according to an embodiment of the present disclosure.
FIG. 13 is a schematic structural diagram of a communication device according to another embodiment of the present disclosure.
FIG. 14 is a schematic structural diagram of a communication device according to yet another embodiment of the present disclosure.
FIG. 15 is a schematic structural diagram of a communication device according to yet another embodiment of the present disclosure.
FIG. 16 is a schematic structural diagram of a communication device according to yet another embodiment of the present disclosure.

### DETAILED DESCRIPTION

Technical solutions in the present disclosure will be described below with reference to the drawings. In order to facilitate understanding of the present disclosure, the following describes the architecture applicable to the embodiments of the present disclosure, the communication processes involved, and the terminology.

The technical scheme of the embodiment of the present disclosure can be applied to various wireless communication systems, such as a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, an advanced long term evolution (LTE-A) system, a new radio (NR) system, an evolution system of an NR system, an LTE-based access to unlicensed spectrum (LTE-U) system, an NR-U system, a universal mobile telecommunication system (UMTS), a worldwide interoperability for microwave access (WiMAX) communication system, a wireless local area networks (WLAN), a wireless fidelity (WiFi), a next generation communication system, or other communication systems, etc.

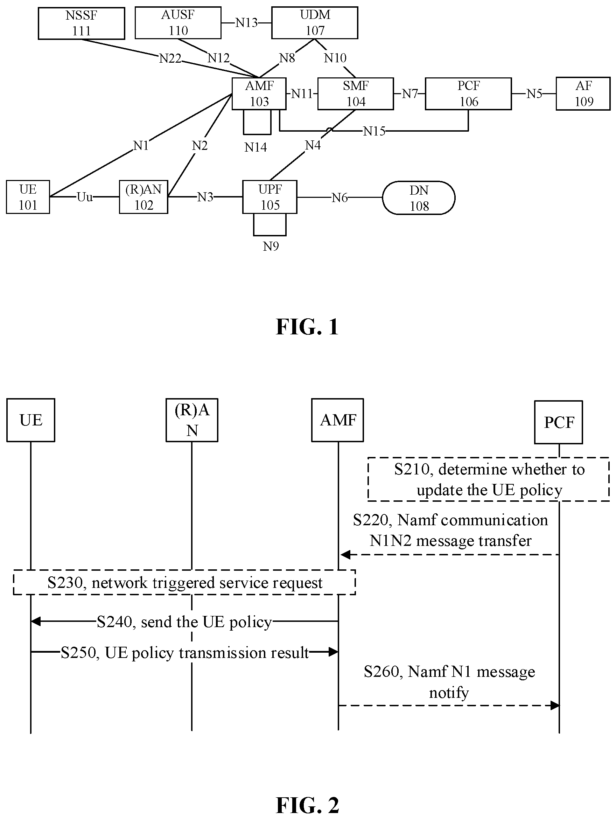

FIG. 1 is a schematic diagram of a wireless communication system according to an embodiment of the present disclosure. As shown in FIG. 1, a 5th generation (5G) system or a new radio (NR) network architecture released by the 3rd generation partnership project (3GPP) standard group includes a terminal device (also known as "user equipment (UE)" 101, an access network device 102 (including a radio access network (RAN) or an access network (AN)) supporting 3GPP technology, a user plane function (UPF) network element 105, an access and mobility management function (AMF) network element 103, a session management function (SMF) network element 104, a policy control function (PCF) network element 106, an application function (AF) network element 109, a data network (DN) 108, a network slice selection function (NSSF) 111, an authentication server function (AUSF) 110, and a unified data management (UDM) 107.

It should be noted that the network architecture shown in FIG. 1 does not constitute a limitation of the 5G network architecture, and in specific implementation, the 5G network architecture may include more or fewer network elements than shown in the figure, or may combine certain network elements, or the like. In FIG. 1, AN or RAN are represented by (R) AN.

The terminal device 101 may be user equipment (UE), a terminal, a handheld terminal, a notebook computer, a subscriber unit, a cellular phone, a smart phone, a wireless data card, a personal digital assistant (PDA) computer, a tablet type computer, a wireless modem (modem), a handheld device, a laptop computer, a cordless phone or a wireless local loop (WLL) station, a machine type communication (MTC) terminal, a handheld device having a wireless communication function, a computing device, a processing device connected to a wireless modem, a drone, an in-vehicle device, a wearable device, a terminal in the Internet of Things, a virtual reality device, a terminal device in a future communication system (e.g., 6G) network, a terminal in a future evolution public land mobile network (PLMN), or the like. The wearable device may be, for example, a watch, a bracelet, glasses based on augmented reality (AR) /virtual reality (VR) technology, or the like.

The access network device 102 is an access device through which a terminal device wirelessly accesses the network architecture, and is mainly responsible for radio resource management, quality of service (QoS) management, data compression and encryption, and the like on the air interface side. For example, a base station NodeB, an evolved base station eNodeB, a base station in a 5G mobile communication system or a new radio (NR) communication system, a base station in a future mobile communication system, and the like.

The AMF network element 103, the SMF network element 104, the UPF network element 105, and the PCF network element 106 are network elements of the 3GPP core network (abbreviated as core network elements). The UPF network element 105 may be referred to as a user plane functional network element, which is mainly responsible for the transmission of user data, and the other network elements may be referred to as control plane functional network elements, which are mainly responsible for certification, authentication, registration management, session management, mobility management, policy control, etc., to ensure the reliable and stable transmission of user data.

The AMF network element 103 (or simply "AMF") may be used to manage the access of terminal devices to the core network, for example, location update of terminal devices, network registration, access control, mobility management of terminal devices, attachment and de-attachment of terminal devices, etc. The AMF network element may also, when providing services for a session of a terminal device, provide storage resources for the control plane of the session to store a session identifier, an SMF network element identifier associated with the session identifier, etc. The functions related to this application may relate to the management of access authorization/authentication. When the terminal device is registered in the serving network, the AMF network element of the serving network sends an initial authentication request to the home network AUSF network element, and receives an authentication vector from the home AUSF network element to complete the authentication of the terminal device in the serving network. After the terminal device passes the authentication in the serving network, the AMF network element initiates the registration procedure, and the AMF network element obtains the user subscription data from the UDM network element.

The SMF network element 104 (or simply "SMF") may be used to select a user plane network element for the terminal device, redirect a user plane network element for the terminal device, assign an internet protocol (IP) address to the terminal device, establish a bearer (also referred to as a session) between the terminal device and the UPF network element, modify and release sessions, and perform QoS control.

The UPF network element 105 (or simply "UPF") may be used to forward and receive data of the terminal device. For example, the UPF network element may receive data of the service from the data network and transport it to the terminal device through the access network device. The UPF network element may also receive user data from the terminal device through the access network device and forward it to the data network. Here, the transmission resources allocated and scheduled by the UPF network element for the terminal device are managed and controlled by the SMF network element. The bearer between the terminal device and the UPF network element may include a user plane connection between the UPF network element and the access network device, and establishing a channel between the access network device and the terminal device. Here, the user plane connection is a QoS flow that can establish transmission data between the UPF network element and the access network device.

The PCF network element 106 (or simply "PCF") is used to provide policies such as a QoS policy, a slice selection policy, a UE policy, and the like to the AMF network element 103, the SMF network element 104. In some implementations, the PCF may manage the issuance, update, etc. of policies.

The UDM network element 107 (or simply "UDM") includes functions such as generation and storage of user subscription data, management of authentication data, and supports interaction with external third-party servers. In the registration procedure, after receiving a registration message from the AMF, the UDM network element may return subscription data.

The DN network element 108 may be, for example, an IP multi-media service (IMS) network, the Internet, or the like, providing data services to users. In the DN 108, there may be a variety of application servers (AS) that provide different application services, such as operator services, Internet access or third-party services, etc. The AS may implement the functions of the AF network element.

The AF network element 109 (or simply "AF") is used to interact with the 3GPP core network element to support application-influenced data routing, access network exposure functions, and interact with the PCF network element for policy control, etc.

The AUSF network element 110 (or simply "AUSF") is used to receive the request of the AMF 103 to authenticate the terminal device, request a key from the UDM 107, and then forward the issued key to the AMF 103 for authentication processing.

The NSSF network element 111 (or simply "NSSF") is used for network slice selection, and supports the following functions: selecting a network slice instance set serving the UE; determining allowed network slice selection assistance information (NSSAI), and, if needed, determining a mapping to the subscribed single-network slice selection assistance information (S-NSSAI); determining the configured NSSAI and, if needed, the mapping to the subscribed S-NSSAI; determining a set of AMFs that may be used to query the UE, or determining a list of candidate AMFs based on the configuration.

It should be understood that each network element in FIG. 1 may be either a network element in a hardware device, a software function running on dedicated hardware, or a virtualized function instantiated on a platform (e.g., a cloud platform). It should be noted that in the network architecture shown in the above-described drawings, it is only an exemplary illustration of the network elements included in the entire network architecture. In the embodiment of the present disclosure, network elements included in the entire network architecture are not limited.

In order to enable the terminal device to access the 3GPP core network (abbreviated as the core network) and enjoy the services provided by the core network, the communication message between the terminal device and the network element of the core network may include the identifier of the terminal device, so as to facilitate the identifier of the terminal device and registration, authentication or policy configuration for the terminal device.

In the embodiment of the present disclosure, the identifier of the terminal device is an identifier for indicating the identity of the terminal device. In some embodiments, the identifier of the terminal device is stored in a subscriber identity module (SIM) or a universal subscriber identity module (USIM).

The embodiment of the present disclosure does not specifically limit the type of the identifier of the terminal device, as long as it can be used to identify the terminal device. As an example, the identifier of the terminal device may be an international mobile subscriber identity (IMSI), a subs cription permanent identifier (SUPI), or an identifier determined based on the SUPI.

As one example, the identifier determined based on the SUPI may be a subs cription concealed identifier (SUCI) or a globally unique temporary UE Identity (GUTI). SUCI can be understood as SUPI under privacy protection.

For ease of understanding, an exemplary description of policy configuration for an identifier of a terminal device in related technologies is provided below with reference to FIG. 2.

### UE policy configuration process

FIG. 2 is a flowchart of a UE policy configuration process according to an embodiment of the present disclosure. The method illustrated in FIG. 2 includes operations S210 to S260.

In operation S210, the PCF determines whether to update the UE policy.

It should be noted that if the PCF does not need to update the UE policy, operation S210 may not be included in the procedure shown in FIG. 2. If the PCF determines to update the UE policy, operation S210 will be included in the procedure shown in FIG. 2. Further, if the PCF determines to update the UE policy, the procedure shown in FIG. 2 is also referred to as a "UE configuration update (UCU)" procedure.

In operation S220, the PCF sends a communication service request to the AMF.

In some implementations, the uplink service request may carry the identifier of the terminal device (referred to as the identifier of the UE for short) and a container including information related to the UE policy, for example, the content of the UE policy or the UE policy identifier, and the like. In some embodiments, the identifier of the terminal device is carried in the container.

The aforementioned communication service request may be transported via N1, N2 messages. Therefore, the communication service request may also be expressed as "Namf_Communication_N1N2 Message Transfer".

In operation S230, the network side triggers a service request (network triggered service request), so that the network can communicate with the UE. The identifier of the UE may be included in the service request.

In operation S240, the AMF sends the UE policy to the UE.

In some implementations, the UE policy described above may be encapsulated in a container, which may be a container from the PCF to the AMF, and accordingly, the AMF may transparently transport the container to the UE after receiving the container. Here, transparent transmission may be understood as the AMF not perceiving or modifying the container.

In other implementations, the UE policy or container described above may be from the AMF to the UE via a downlink non-access stratum (NAS) message (or downlink NAS message).

In operation S250, the UE sends the UE policy transmission result to the AMF.

In some implementations, the UE policy transmission result described above indicates whether the UE successfully received the UE policy. The UE policy transmission result may include an identifier of the UE.

In operation S 260, the AMF sends an N1 message notify (denoted as "Namf_N1MessageNotify") to the PCF to inform the PCF of the UE policy transmission result.

In some implementations, the above-described N1 message notify may be referred to as a "manage UE policy complete" message.

Operations S220 and S260 may include two messages, namely, a request and a response to the request. The method shown in FIG. 2 only shows the requests of the two operations, and does not show the responses to the above two requests.

In addition, as described above, the PCF may send the container to the UE to transport the UE policy, but conversely, the UE may send the container to the PCF via the container. In this case, the container may be from the UE to the AMF via an uplink NAS message, and transparently transported by the AMF to the PCF.

In the process shown in FIG. 2, in order to transport the UE policy, a cause value of the "UE policy container" is introduced in the downlink NAS and uplink NAS messages. For example, the UE policy container cause value may be added in the payload container. Accordingly, after obtaining the UE policy container cause value, the AMF may perform a transparent transmission function to transparently transport the container to the UE or the PCF.

### UE Policy

The UE policy may include a UE route selection policy (URSP), an access network discovery and selection policy (ANDSP), and the like, which are described below with URSP as an example.

The URSP may indicate a binding relationship between the application data and a protocol data unit (PDU) session, and may indicate what PDU session the UE needs to establish to transport the application data. Typically, the URSP may include one or more URSP rules.

The URSP rule may include one or more of the following information: a rule precedence, a traffic descriptor (TD), application descriptors, IP descriptors, domain descriptors, Non-IP descriptors, a data network name (DNN), connection capabilities, a route selection descriptor (RSD) list.

It should be noted that each URSP rule in the URSP has a different rule precedence. In other words, different URSP rules in URSP correspond to different rule precedences.

As can be seen from the above-described embodiment of UE policy configuration, in the related art, the communication message between the terminal device and the core network usually includes the identifier of the terminal device to identify the terminal device or perform policy configuration for the terminal device.

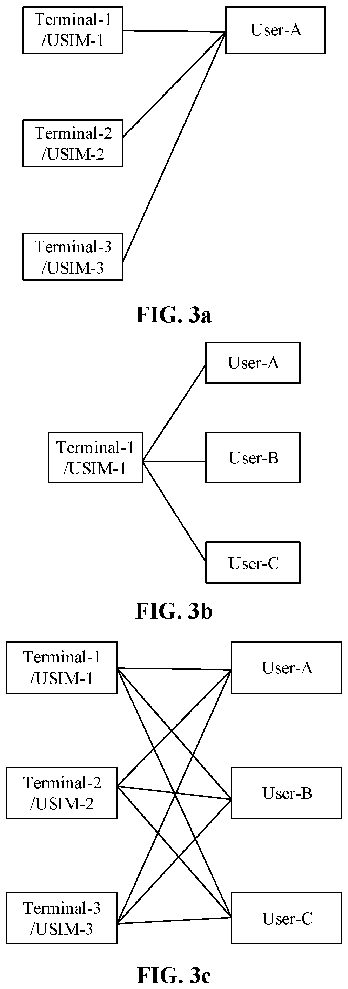

However, with the development and popularization of electronic devices, there are many different forms of terminal devices for consumers to use, and various forms of terminal devices have their own advantages. In view of this, there may be three scenarios: Scenario 1, the same user may have multiple terminal devices (as shown in FIG. 3a); Scenario 2: the same terminal device may have multiple users (as shown in FIG. 3b); Scenario 3: multiple terminal devices may have multiple users, where each terminal device has one or more users (as shown in FIG. 3c).

Based on the above scenarios, it can be known that the following scenario occurs in all these scenarios: one terminal device can be used by multiple users. It should be understood that in the embodiment of the present disclosure, the user of the terminal device may be a person or an electronic device, and the embodiment of the present disclosure does not specifically limit this. For example, when the same terminal device (for example, a mobile phone) is used by multiple people, the multiple people may act as multiple users corresponding to the terminal device. In another example, when the same terminal device is connected to the 3GPP network by multiple electronic devices as gateways (GWs), the multiple electronic devices may act as multiple users corresponding to the terminal device. As an example, when both a tablet computer and a notebook computer are connected to the core network as a GW via a mobile phone, the tablet computer and the notebook computer may be multiple users corresponding to the mobile phone.

For different users of the same terminal device, the services required by different users when accessing the core network may be different. However, as previously described, in the present technology, the terminal device and the network element of the core network perform registration, authentication, or policy configuration for the terminal device based on a communication message including the identifier of the terminal device. That is, in the present technology, the core network can only distinguish different terminal devices, but cannot identify users who use the terminal devices. Therefore, it is impossible to perform registration, authentication, or policy configuration for different users.

In view of this, the embodiment of the present disclosure introduces a first identifier, where the identifier of the terminal device corresponds to one or more user identifiers, and the first identifier is one of the one or more user identifiers. In the method for wireless communication proposed by the embodiment of the present disclosure, the terminal device can send a first message including the first identifier to a network element of the core network, so that the core network can identify the user corresponding to the first identifier, thereby enabling user-granularity registration, authentication, or policy configuration, etc.

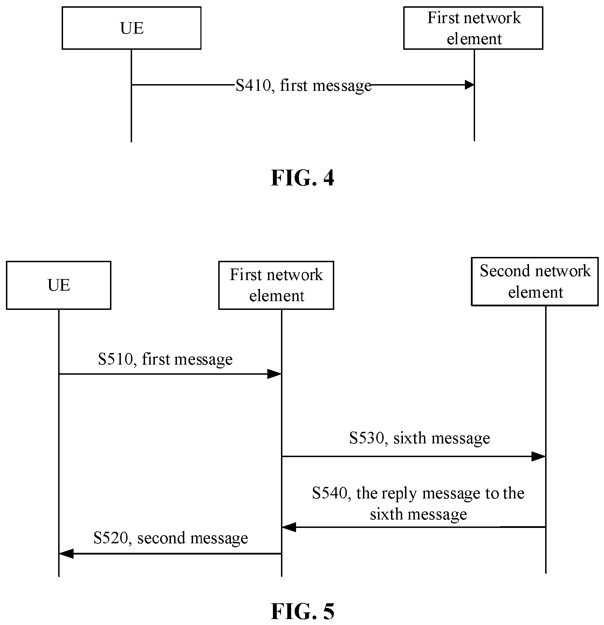

A method for wireless communication according to an embodiment of the present disclosure will be described below with reference to FIG. 4, and the method shown in FIG. 4 includes operation S410.

In operation S410, the terminal device sends a first message to the first network element.

In an embodiment of the present disclosure, the first message includes a first identifier. The identifier of the terminal device corresponds to one or more user identifiers, and the first identifier is one of the one or more user identifiers. For example, the first identifier may be an identifier corresponding to a user currently using the terminal device. The user identifier may be referred to as a user ID (user Identifier or user Identity), and the user identifier is used to identify a particular user using the terminal device.

The embodiment of the present disclosure does not specifically limit the type of user identifier. As one example, the user identifier may be a username. The username may be, for example, a user's name or mailbox. The name of the user may be a person name or a device name. As another example, the user identifier may be a biometric feature of the user. The biometric feature may be, for example, a face, a fingerprint, or a pupil.

As an implementation, the identifier of the terminal device is an IMSI, a SUPI, or an identifier determined based on the SUPI.

The first network element may be any one of the network elements in the core network. As one example, the first network element may be a network element for enabling the terminal device to access the core network. For example, the first network element may be an AMF.

The first message may be a NAS message. The embodiment of the present disclosure does not specifically limit the use of the first message as long as the first message is a message from the terminal device to the first network element.

As one example, the first message may be used to authenticate the first identifier.

As an implementation, the first message is a first registration request message.

As an implementation, the first message is a response message to an authentication request message from the first network element.

As an implementation, the authentication request message is a first registration reply message.

As an implementation, the first message further includes authentication information of the first identifier.

As an implementation, the authentication information includes one or more of: a username, a password, a first key determined based on biometric information of a user of the terminal device, or an authentication parameter generated based on the first key.

As an implementation, the method further includes: the terminal device receives a second message from the first network element. The second message includes one or more of: a second identifier, the second identifier being an identifier used after the first identifier is successfully authenticated; or an authentication result indicating that the authentication of the first identifier is successful or failed.

In some embodiments, a second identifier may be included in the second message. Whether the authentication of the first identifier is successful is indicated by whether the second identifier is included in the second message. If the second message includes the second identifier, the authentication is successful, and if the second message does not contain the second identifier, the authentication is unsuccessful. The second identifier is similar to a Token or certificate. Subsequently, when the user uses the terminal device to access, it only needs to carry the second identifier without re-authentication.

In some embodiments, the second message may include an authentication result. If the authentication is successful, the authentication result indicates that the authentication of the first identifier is successful, and if the authentication is failed, the authentication result indicates that the authentication of the first identifier is failed.

As an implementation, the second message is a first registration reply message.

As an implementation, the second message is generated after the first network element authenticates the first identifier.

As an implementation, the second message may be received by the first network element via the second network element.

As an implementation, the method further includes: sending, by the first network element, a sixth message to a second network element, the sixth message being used to request the second network element to authenticate the first identifier; or receiving, by the first network element, a reply message to the sixth message from the second network element, the reply message to the sixth message including one or more of: a second identifier, the second identifier being an identifier used after the first identifier is successfully authenticated; or an authentication result indicating that authentication of the first identifier is successful or failed.

As an implementation, the second network element is a network element of a core network, or the second network element is an authentication server communicatively connected to the core network.

In some embodiments, after authenticating the first identifier, the first network element may also be caused to obtain the subscription information or policy information corresponding to the first identifier.

As an implementation, the method further includes: sending, by the first network element, a seventh message to a third network element, the seventh message being used to determine a policy corresponding to the first identifier.

As an implementation, the seventh message includes the first identifier after authentication, and the method further includes: receiving, by the first network element, a reply message to the seventh message from the third network element, the reply message to the seventh message including the policy corresponding to the first identifier.

As an implementation, the seventh message includes the identifier of the terminal device after authentication, and the method further includes: receiving, by the first network element, a reply message to the seventh message from the third network element, the reply message to the seventh message including policies corresponding to the one or more user identifiers; and after the first identifier is successfully authenticated, determining, by the first network element, the policy corresponding to the first identifier from the policies corresponding to the one or more user identifiers.

As an implementation, the third network element is a PCF network element.

As another implementation, the method further includes: sending, by the first network element, an eighth message to a fourth network element, the eighth message being used to determine subscription information corresponding to the first identifier.

As an implementation, the eighth message includes the first identifier after authentication, and the method further includes: receiving, by the first network element, a reply message to the eighth message from the fourth network element, the reply message to the eighth message including subscription information corresponding to the first identifier.

As an implementation, the eighth message includes the identifier of the terminal device after authentication, and the method further includes: receiving, by the first network element, a reply message to the eighth message from the fourth network element, the reply message to the eighth message including subscription information corresponding to the one or more user identifiers; and after the first identifier is successfully authenticated, determining, by the first network element, the subscription information corresponding to the first identifier from the subscription information corresponding to the one or more user identifiers.

As an implementation, the fourth network element is a UDM network element.

As yet another example, the first message is used to request verification of the first identifier.

As described above, after the authentication of the first identifier, if the authentication of the first identifier is successful, the terminal device may obtain the second identifier via the second message. In some cases, the user needs to authenticate again. In order to avoid the need for repeated authentication when authenticating, the terminal device may also verify the second identifier via the third message.

As an implementation, the method further includes: the terminal device sends a third message to the first network element, and the third message is used to verify the second identifier. Optionally, the third message may include a second identifier.

In some embodiments, the first network element may send, based on the third message, a verification request message to the network element having a function of verifying the second identifier. The verification request message may include a second identifier. The network element having the function of verifying the second identifier is generally the same as the network element having the authentication function, that is, the network element having the function of verifying the second identifier is the second network element. The embodiment of the present disclosure does not specifically limit the process of verifying the second identifier by the second network element.

As an example, a list of identifiers is stored in the second network element, and the verification process may be that the second network element searches whether there is a stored second identifier in the stored list, if there is, it indicates that the verification of the second identifier is successful, and if there is no, it indicates that the verification of the second identifier is failed.

As another example, the first identifier and the second identifier corresponding to the first identifier are stored in the second network element, and the verification process may be that the second network element compares whether the second identifier in the verification request message is the same as the stored second identifier corresponding to the first identifier, if the same, it indicates that the verification of the second identifier is successful, and if the verification is not the same, it indicates that the verification of the second identifier is failed.

As an implementation, the third message is triggered based on one or more of: switching from a third identifier to the first identifier, the third identifier being one of the one or more user identifiers; a user corresponding to the first identifier not using the terminal device within a first duration; the terminal device initiating a periodic registration update; or a network device indicating that the terminal device sends the second identifier.

As an implementation, the periodic registration update includes one or more of: a periodic registration update for the identifier of the terminal device; or a periodic registration update for the first identifier.

As an implementation, the second identifier includes the first identifier; or the second identifier does not include the first identifier, and the third message includes the first identifier.

As an implementation, the third message is a second registration request message.

As an implementation, the method further includes: the terminal device receives a fourth message from the first network element, the fourth message including a verification result of the second identifier.

As an implementation, the fourth message is a second registration reply message.

As yet another example, the first message is used to request the core network to update the policy of the terminal device to the policy corresponding to the first identifier.

As an implementation, the first message is used to request that the policy of the terminal device be updated to the policy corresponding to the first identifier.

As an implementation, the first message includes a policy container of the terminal device, and the first identifier is carried in the policy container.

As an implementation, the first message is further used to verify the second identifier, the second identifier being an identifier used after the first identifier is successfully authenticated.

As an implementation, the method further includes: receiving, by the terminal device, a fifth message from the first network element, the fifth message being used to update a policy of the terminal device to a policy corresponding to the first identifier.

In some embodiments, the fifth message may be obtained by the first network element from the second network element.

The method for wireless communication provided by the embodiment of the present disclosure can send a first message including a first identifier to a first network element via a terminal device, so that a core network is able to identify a user corresponding to the first identifier, thereby achieving user-granular registration, authentication, or policy configuration.

For ease of understanding, the following describes how the embodiment of the present disclosure performs authentication, registration, or UE policy update for the first identifier, respectively.

### Embodiment 1 (Authentication)

As shown in FIG. 5, the method for wireless communication according to the embodiment of the present disclosure includes operations S510-S520.

In operation S510, the terminal device sends a first message to the first network element.

The first message is used to authenticate the first identifier. The embodiment of the present disclosure does not specifically limit the type of the first message.

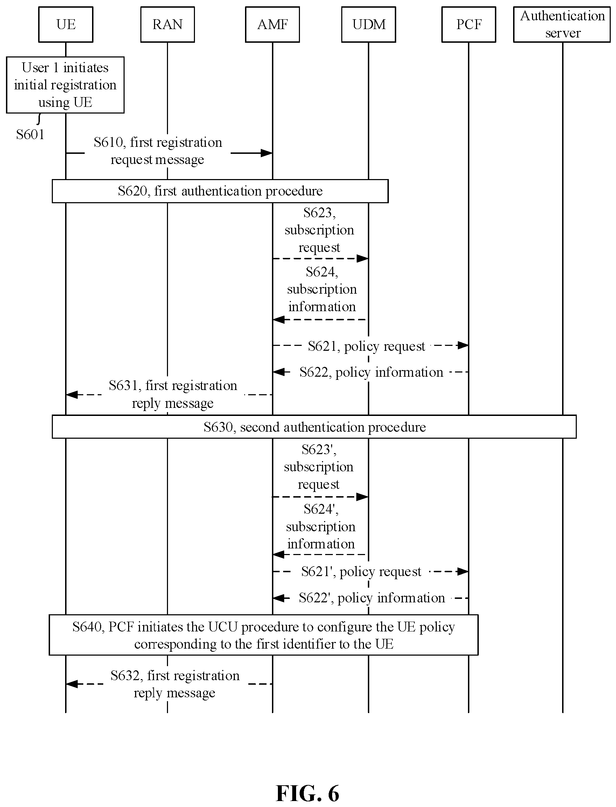

As an implementation, the first message may be a first registration (register) request message as shown in FIG. 6. The first registration request message may be triggered by operation S601 in FIG. 6. As shown in operation S601, the user corresponding to the first identifier (abbreviated as user 1) initiates initial registration using the terminal device.

The initial registration may be, for example, a registration when user 1 turns on the terminal device for the first time, or a registration sent when a new user (user 1) uses the terminal device. The new user can be understood as a user who has never registered with the terminal device.

In some embodiments, the identifier of the terminal device may also be included in the first message. The identifier of the terminal device may be the aforementioned SUPI, SUCI or IMSI. Optionally, the first message is further used to authenticate the identifier of the terminal device.

Optionally, a first capability may also be included in the first message. The first capability indicates that the terminal device supports relevant capabilities based on user granularity (i.e., first identity granularity), such as user information collection, authentication of user identifier, policy configuration of user granularity, parameter configuration of user granularity, etc.

Optionally, the first capability may be sent to the first network element as a NAS capability.

Optionally, the first capability may be reported by the terminal device to the first network element after the first network element requests the terminal device to report it.

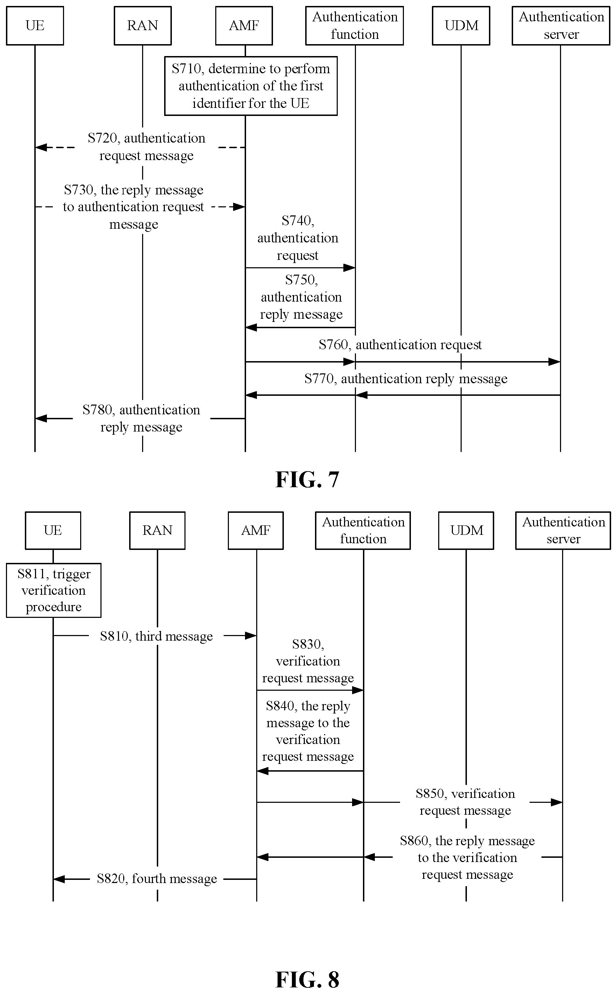

As another implementation, the first message may be a response message to an authentication request message (or a reply message to an authentication request message) as shown in FIG. 7 from the first network element.

In some embodiments, the first message may further include authentication information of the first identifier. The authentication information of the first identifier may be understood as information for authenticating the first identifier.

As one example, the authentication information of the first identifier includes one or more of: a username, a password, a first key, and an authentication parameter generated based on the first key.

The username may be a person name or a device name as described above.

The password may be a password associated with a username. For example, the password may be a password entered by the user when logging in with the username.

The first key may be determined based on biometric information of a user of the terminal device. The biometric information includes fingerprint, face and other biometric information. As one example, the first key may be a key generated by biometric information and configured auxiliary parameters.

The authentication parameter generated based on the first key may be sent to the network side for authentication in subsequent methods.

In some implementations, the first identifier and authentication information may be encapsulated in a Container or in an Extensive Authentication Protocol (EAP) message.

In operation S520, the terminal device receives the second message from the first network element.

The second message is a message from the first network element to the terminal device after the first identifier is authenticated. The second message includes one or more of: a second identifier or an authentication result. The second identifier is an identifier used after the first identifier is successfully authenticated. As one example, the second identifier is similar to a Token or certificate. Subsequently, when the user uses the terminal device to access, it only needs to carry the second identifier without re-authentication. The authentication result indicats that authentication of the first identifier is successful or failed.

In some embodiments, the second message may be an authentication reply message shown in FIG. 7.

In other embodiments, the second message is a first registration reply message as shown in FIG. 6. By setting the second message as the first registration reply message, the authentication of the first identifier can be performed based on the existing registration procedure, so that the influence of the authentication of the first identifier on the existing architecture can be controlled.

In the method for wireless communication provided by the embodiment of the present disclosure, the terminal device may send a first message for authenticating the first identifier to the first network element (the first message includes the first identifier), and receive a second message including the second identifier and/or the authentication result from the first network element. So that authentication of user identity granularity is realized.

The embodiment of the present disclosure does not specifically limit the network element generating the second identifier and/or the authentication result.

As one example, the second identifier and/or authentication result may be generated by a first network element having an authentication function.

As another example, the second identifier and/or authentication result may be received by the first network element from the second network element. The second network element may be a network element having an authentication function and different from the first network element.

As an example, the second network element may be a network element having an authentication function within the core network (abbreviated as an authentication function). For example, the second network element may be an AUSF.

As another example, the second network element may be a network element having an authentication function outside the core network (abbreviated as an authentication server). For example, the second network element may be an authentication server communicatively connected to the core network.

In view of this, as shown in FIG. 5, the method for wireless communication provided by the embodiment of the present disclosure further includes operations S530 and/or S540.

Operation S530: the first network element sends a sixth message to the second network element.

The sixth message includes a first identifier and an authentication message and is used to request the second network element to authenticate the first identifier.

Operation S540: the first network element receives a reply message to the sixth message from the second network element.

The reply message to the sixth message is generated after the second network element performs authentication for the first identifier, and the reply message to the sixth message includes one or more of: the second identifier or the authentication result.

In some embodiments, the second network element may include an authentication function and an authentication server. In view of this, the method for wireless communication provided by the embodiment of the present disclosure may include: the first network element first sends a sixth message to one of the authentication function and the authentication server and/or receives a reply message to the sixth message from one of the authentication function and the authentication server; if the authentication result in the reply message to the sixth message indicates that the authentication has failed, the first network element continues to send the sixth message to the other of the authentication function and the authentication server and/or receives the reply message to the sixth message from the other of the authentication function and the authentication server.

By setting two different network elements with authentication functions, the embodiment of the present disclosure can realize the double guarantee of authentication of user identity granularity, and avoid user registration failure caused by authentication failure of a single network element with authentication function.

In some embodiments, as shown in FIG. 7, before operation S530, the method may further include operation S710: the first network element determines to perform authentication of the first identifier on the terminal device.

As an example, the first network element may determine to perform the authentication of the first identifier according to the first capability reported by the terminal device, the indication information from another network element (such as the authentication function AUSF), and/or the local configuration of the first network element.

As described above, the first message may be a response message to an authentication request message from the first network element. In view of this, as shown in FIG. 7, after operation S710, the method for wireless communication includes operation S720 and operation S730.

In operation S720, the first network element sends an authentication request message to the terminal device.

The authentication request message is used to request authentication of the first identifier. In some embodiments, the authentication request message may be a first registration reply message.

In operation S730, the terminal device sends a response message to the authentication request message to the first network element.

The response message to the authentication request message is the first message described above, and the response message to the authentication request message may include a first identifier and authentication information of the first identifier.

As described above, the authentication based on the sixth message provided in the embodiment of the present disclosure may be implemented in two network elements having authentication functions. The embodiment of the present disclosure does not specifically limit the network element having the authentication function that interacts with the first network element first. The network element having the authentication function that interacts with the first network element first may be determined based on precedence or interaction efficiency.

As an example, a network element having an authentication function that interacts with the first network element first may be an authentication function. In view of this, as shown in FIG. 7, the communication method in the embodiment of the present disclosure further includes the following operations.

In operation S740, the first network element sends an authentication request to the authentication function.

In operation S750, the first network element receives the authentication reply message from the authentication function.

If this authentication reply message indicates that the authentication was successful, the authentication ends. At this time, the authentication reply message from the authentication function includes the second identifier.

If the authentication reply message indicates that the authentication has failed, operation S760 and operation S770 are performed.

In operation S760, the first network element sends an authentication request to the authentication server.

In operation S770, the first network element receives the authentication reply message from the authentication server.

At this time, the authentication reply message from the authentication server includes the authentication result. If the authentication result indicates that the authentication is successful, the authentication reply message from the authentication server includes the authentication result as well as the second identifier. In some embodiments, the reply message to the authentication request may also be referred to as an authentication reply message.

The authentication request is used to authenticate the first identity. In some embodiments, the authentication request includes a first identifier.

It should be noted that the authentication request in operations S740-S770 may be the sixth message described above. The authentication reply message in operations S740-S770 may be a reply message to the sixth message described above.

In operation S780, the first network element sends an authentication reply message to the terminal device.

The authentication reply message may be the second message described above.

In the embodiment of the present disclosure, by setting the network element having the authentication function that interacts with the first network element first as the authentication function, the authentication efficiency of the authentication of the first identifier can be ensured. In addition, if the authentication function inside the core network does not have the capability to authenticate the first identifier, the authentication of the first identifier can be performed by an authentication server outside the core network, thereby ensuring that the authentication of the first identifier can be realized.

In some embodiments, the sixth message further includes an external ID of the terminal device. The external ID of the terminal device may be a communication number corresponding to a subscriber identity module (SIM) or a universal subscriber identity module (USIM) of the identifier of the terminal device. For example, the external ID of the terminal device may be a mobile phone number.

The above-mentioned authentication is typically performed in the registration procedure of the terminal device, that is, the authentication is part of the registration. A method for wireless communication for registering based on the first identifier in an embodiment of the present disclosure will be described below in detail with reference to FIG. 6.

### Embodiment 2 (Registration)

Referring to FIG. 6, the method includes operations S610-S619.

In operation S610, the terminal device sends a first registration request message to the first network element.

The first registration request message may include an identifier of the terminal device and the first registration request is used to perform initial registration for the terminal device.

In some embodiments, the first registration request message may be the first message described above.

In some embodiments, the first message is further used to authenticate the identifier of the terminal device.

In some embodiments, the first message is used to authenticate the first identifier.

Optionally, the core network may authenticate the first identifier after authenticating the identifier of the terminal device.

In some embodiments, before operation S610, operation S601 may be included: the user corresponding to the first identifier (abbreviated as user 1) initiates initial registration using the terminal device.

The initial registration may be, for example, a registration when user 1 turns on the terminal device for the first time, or a registration sent when a new user (user 1) uses the terminal device. The new user can be understood as a user who has never registered with the terminal device.

In operation S620, the first network element triggers the first authentication procedure according to the first registration request message.

The first authentication procedure (authentication and key agreement) may be an authentication procedure based on the identifier of the terminal device. For example, the first authentication procedure may be an authentication procedure based on SUPI, SUCI, or IMSI.

In operation S630, the first network element triggers the second authentication procedure.

The second authentication procedure may be an authentication procedure based on the first identifier. In other words, the second authentication procedure may be the procedure of authenticating the first identifier described above.

In some embodiments, before operation S630, the method for wireless communication includes operation S631 in which the terminal device receives a first registration reply message from the first network element.

The first registration reply message may include an authentication result obtained after authenticating the identifier of the terminal device and/or an identifier generated after authenticating the identifier of the terminal device. The identifier generated after the identifier of the terminal device is authenticated may be an identifier used after the identifier of the terminal device is successfully authenticated. For example, the identifier generated after authenticating the identifier of the terminal device may be an identifier used to verify the identity in subsequent registration.

As an example, when the identifier of the terminal device is SUPI, the identifier GUTI is generated after authenticating the identifier of the terminal device.

In some embodiments, the first registration reply message may include an authentication request message.

In some embodiments, after operation S630, the method may further include operation S632: the terminal device receives the first registration reply message from the first network element.

The first registration reply message may further include a second message. In other words, the first registration reply message includes an authentication result generated after authenticating the first identifier and/or the second identifier.

Optionally, operation S631 may not occur, and at this time, the first registration reply message in operation S632 includes the first registration reply message in operation S631.

Optionally, as shown in FIG. 6, if the authentication result obtained after performing the first authentication procedure indicates that the identifier of the terminal device has successfully passed the authentication, the method for wireless communication may further include operation S621 and operation S622.

In operation S621, the first network element sends a policy request to the third network element.

The policy request is used to determine a policy corresponding to the first identifier. The policy corresponding to the first identifier may be a UE policy and/or a network element policy. The policy request includes the identifier of the authenticated terminal device. The policy request is also used to request a policy corresponding to the identifier of the terminal device, the policy corresponding to the identifier of the terminal device including policies corresponding to one or more user identifiers corresponding to the identifier of the terminal device.

In some embodiments, the policy request may be the seventh message described above.

In operation S622, the first network element receives policy information corresponding to the identifier of the terminal device from the third network element.

The policy information corresponding to the identifier of the terminal device includes policies corresponding to one or more user identifiers.

In some embodiments, the policy information corresponding to the identifier of the terminal device may be a reply message to the seventh message described above.

Corresponding to this, optionally, after operation S630, if the authentication result obtained after performing the second authentication procedure indicates that the first identifier authentication is successful, the method for wireless communication may further include: the first network element determines a policy corresponding to the first identifier from the policies corresponding to one or more user identifiers. For example, a policy corresponding to the first identifier may be looked up from one or more user identifiers using the first identifier.

Optionally, if the authentication result obtained after performing the first authentication procedure indicates that the identifier of the terminal device has successfully passed the authentication, as shown in FIG. 6, the method for wireless communication may further include operation S623 and operation S624.

In operation S623, the first network element sends a subscription request to the fourth network element.

The subscription request includes the identifier of the authenticated terminal device. The subscription request is also used to request subscription information corresponding to the identifier of the terminal device, the subscription information corresponding to the identifier of the terminal device including subscription information corresponding to one or more user identifiers corresponding to the identifier of the terminal device.

In some embodiments, the subscription request may be the eighth message described above.

In operation S624, the first network element receives the subscription information corresponding to the identifier of the terminal device from the fourth network element.

The subscription information corresponding to the identifier of the terminal device includes subscription information corresponding to one or more user identifiers.

In some embodiments, the subscription information corresponding to the identifier of the terminal device is a reply message to the eighth message.

Corresponding to this, optionally, after operation S630, if the authentication result obtained after performing the second authentication procedure indicates that the first identifier authentication is successful, the method for wireless communication may further include: the first network element determines subscription information corresponding to the first identifier from the subscription information corresponding to one or more user identifiers. For example, subscription information corresponding to the first identifier may be looked up from one or more user identifiers using the first identifier.

In some embodiments, the operations S621-S624 described above may not be performed before the second authentication but may be performed after the second authentication.

As an implementation, as shown in FIG. 6, if the authentication result obtained after performing the second authentication procedure indicates that the first identifier has successfully passed the authentication, the method for wireless communication may further include operation S621' and operation S622'.

In operation S621', the first network element sends a policy request to the third network element.

The policy request is used to determine a policy corresponding to the first identifier. The policy request includes an authenticated first identifier. The policy request is configured to request a policy corresponding to the first identifier.

In some embodiments, the policy request may be the seventh message described above.

In operation S622', the first network element receives policy information corresponding to the first identifier from the third network element.

The policy information corresponding to the first identifier includes a policy corresponding to the first identifier.

In some embodiments, the policy corresponding to the first identifier may be a reply message to the seventh message described above.

Optionally, if the authentication result obtained after performing the second authentication procedure indicates that the first identifier has successfully passed the authentication, the method for wireless communication may further include operation S623' and operation S624'.

In operation S623', the first network element sends a subscription request to the fourth network element.

The subscription request is used to determine subscription information corresponding to the first identifier. The subscription request includes an authenticated first identifier. The subscription request is used to request subscription information corresponding to the first identifier.

In some embodiments, the subscription request may be the eighth message described above.

In operation S624', the first network element receives the subscription information corresponding to the first identifier from the fourth network element.

In some embodiments, the subscription information corresponding to the first identifier may be a reply message to the eighth message described above.

Corresponding to this, optionally, after operation S630, if the authentication result obtained after performing the second authentication procedure indicates that the first identifier authentication is successful, the method for wireless communication may further include: the first network element determines subscription information corresponding to the first identifier from the subscription information corresponding to one or more user identifiers. For example, subscription information corresponding to the first identifier may be looked up from one or more user identifiers using the first identifier.

In the embodiment of the present disclosure, the third network element is a network element within the core network that can configure or store a policy, for example, the third network element may be a PCF. The fourth network element may be a network element within the core network that can configure or store subscription data, for example, the fourth network element is a UDM.

In some embodiments, after the first identifier is registered and authenticated, the first identifier may also be verified.

As one example, the first message is also used to verify the second identifier. In view of this, the first message may further include a second identifier.

As another example, the terminal device may verify the second identifier based on a third message including the second identifier. This will be described in detail below with reference to FIG. 8.

In the method for wireless communication provided by the embodiment of the present disclosure, the first network element can obtain the subscription information or the policy information corresponding to the first identifier by sending the seventh message or the eighth message, thereby realizing the acquisition of the subscription information or the policy information of the user identity granularity.

### Embodiment 3 (Verification)

Referring to FIG. 8 in detail, the method for wireless communication may include operations S810-S820.

In operation S810, the terminal device sends a third message to the first network element.

The third message may include a second identifier. The third message is used to verify the second identifier.

In some embodiments, as described in FIG. 8, before operation S810, the method may further include operation S811: the terminal device triggers a verification procedure. That is, the third message may be generated after the verification procedure is triggered.

Optionally, the condition for triggering the verification procedure is one or more of (i.e., the third message is triggered based on one or more of): switching from a third identifier to the first identifier, the third identifier being one of the one or more user identifiers; a user corresponding to the first identifier not using the terminal device within a first duration; the terminal device initiating a periodic registration update; or a network device indicating that the terminal device sends the second identifier. As an example, the periodic registration update includes one or more of: a periodic registration update for the identifier of the terminal device; or a periodic registration update for the first identifier.

In some embodiments, the third message may further include the first identifier if the second identifier does not include information of the first identifier.

In some embodiments, the third message may be a second registration request. The second registration request can be understood as a registration request message sent when performing registration again after initial registration is completed. In view of this, the third message may further include an identifier of the terminal device or an identifier generated after authenticating the identifier of the terminal device, such as a GUTI.

In operation S820, the terminal device receives the fourth message from the first network element.

The fourth message includes the verification result of the second identifier. In some embodiments, the fourth message is a second registration reply message. The second registration reply message is a reply message corresponding to the second registration request message.

In the embodiment of the present disclosure, the network element for verifying the second identifier is not specifically limited, and may be the same as the network element for authenticating the first identifier described above. For ease of understanding, this will be described with reference to FIG. 8.

In view of this, as shown in FIG. 8, the communication method in the embodiment of the present disclosure further includes the following operations.

In operation S830, the first network element may send a verification request message to the authentication function.

The verification request message may include a second identifier. Alternatively, the verification request message may include a first identifier and a second identifier.

In operation S840, the first network element receives a reply message to the verification request message from the authentication function.

If the reply message to this verification request message indicates that the verification is successful, the verification ends.

If the reply message to the verification request message indicates that the verification has failed, operation S850 and operation S860 are performed.

In operation S850, the first network element sends a verification request message to the verification server.

In operation S860, the first network element receives a reply message to the verification request message from the verification server.

At this time, the reply message to the verification request message from the verification server includes the verification result. The verification result may indicate that the verification of the second identifier is successful or failed.

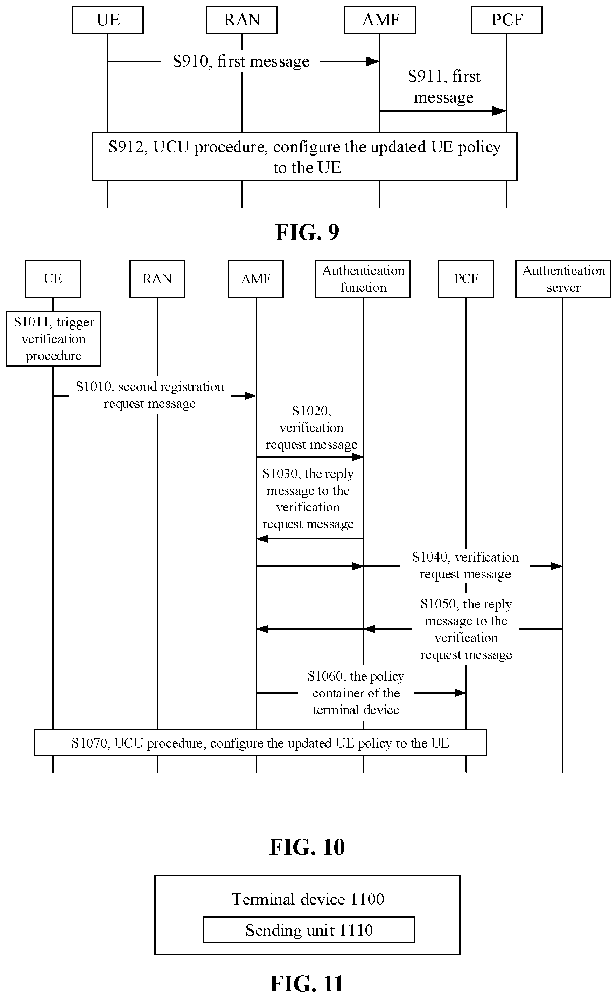

Different User IDs may correspond to different UE policies, so when the user using the terminal changes (i.e., the User ID changes), or when the first identifier authentication is completed, the UE may initiate a registration update procedure to trigger the core network to configure the updated UE policy. In view of this, in some embodiments, after registering the first identifier, the UE policy may also be updated for the first identifier. This is exemplarily described below with reference to FIG. 9.

In the method for wireless communication provided by the embodiment of the present disclosure, the terminal device may send a third message for verifying the second identifier to the first network element (the first message includes the second identifier), and receive a fourth message including the verification result of the second identifier from the first network element. So that verification of user identity granularity is realized.

### Embodiment 4 (Update UE Policy)

Referring to FIG. 9, the method for wireless communication includes the following operations.

In operation S910, the terminal device sends a first message to the first network element.

The first message includes a first identifier, and the first message is used to request that the policy of the terminal device be updated to the policy corresponding to the first identifier.

In some embodiments, the first message may be the first registration request message described above.

In other embodiments, the first message is further used to verify the second identifier, the second identifier being an identifier used after the first identifier is successfully authenticated. For example, the first message may be the second registration request message described above.

In some embodiments, the first message includes a policy container of the terminal device, and the first identifier is carried in the policy container.

In some embodiments, the method for wireless communication may further include: the terminal device receives a fifth message from the first network element.

The fifth message is used to request that the policy of the terminal device be updated to the policy corresponding to the first identifier.

In some embodiments, the terminal device receiving the fifth message from the first network element may trigger an operation in the UCU procedure. As an example, as shown in FIG. 9, the method further includes operations S911 and S912 after operation S910.

In operation S911, the first network element forwards the first message to the third network element.

In some embodiments, the first message forwarded by the first network element to the third network element may be a policy association modification request message.

In some embodiments, the first message includes a policy container of the terminal device, and the first identifier is carried in the policy container. The first network element may forward the policy container of the terminal device to the third network element.

In operation S912, the third network element initiates the UCU procedure according to the received first identifier, and configures the updated UE policy to the UE.

In some embodiments, the updated UE policy may be included in a policy container of the terminal device. Optionally, the policy container of the terminal device may further carry the first identifier to indicate that the updated UE policy is used for the corresponding first identifier.

In operation S912, the terminal device may receive the fifth message from the first network element.

The embodiment of the present disclosure does not introduce the UCU procedure initiated by the third network element in detail, and can refer to the UCU procedure described above for details. Different from the UCU procedure described above, the interactive messages involved in the UCU procedure in the embodiment of the present disclosure may all include the first identifier.

In the method for wireless communication provided by the embodiment of the present disclosure, the terminal device can send a first message including a first identifier to the first network element, and receive a fifth message from the first network element via the first message, and the fifth message can be used to update a policy of the terminal device to a policy corresponding to the first identifier, thereby realizing UE policy update of user identity granularity.

### Embodiment 5 (Combined UE Policy Update and Verification)

In some embodiments, the UE policy update may be combined with verification. As an example, as shown in FIG. 10, the method includes the following operations.

In operation S1011, the terminal device triggers the verification procedure.

In operation S1010, the terminal device sends a second registration request message to the first network element.

The second registration request message is used to verify the second identifier and update the policy of the terminal device. The second registration request message may include a policy container of the terminal device and a second identifier. Optionally, the second registration request message may further include a first identifier. The first identifier is carried in the policy container or the policy container is associated with the first identifier. In some embodiments, the second registration request message may be the first message or the second message described above.

In operation S1020, the first network element may send a verification request message to the authentication function.

The verification request message includes a second identifier.

In operation S1030, the first network element receives a reply message to the verification request message from the authentication function.

If the reply message to this verification request message indicates that the verification is successful, the verification ends.

If the reply message to the verification request message indicates that the verification has failed, operation S1040 and operation S1050 are performed.

In operation S1040, the first network element sends a verification request message to the verification server.

In operation S1050, the first network element receives a reply message to the verification request message from the verification server.

If the reply message to the verification request message indicates that the second identifier has successfully passed the verification, operation S1060 is performed: the first network element forwards the policy container of the terminal device in the second registration request message to the third network element.

In some embodiments, the policy container of the terminal device forwarded by the first network element to the third network element may be carried in a policy association modification request message.

As mentioned above, the first identifier may be carried in the policy container. Correspondingly, the first network element may directly forward the policy container of the terminal device in the second registration request message to the third network element.

Alternatively, the first identifier is not carried in the policy container. Correspondingly, the first network element may forward the policy container and the first identifier of the terminal device to the third network element.

In operation S1070, the third network element initiates the UCU procedure according to the received first identifier.

In the method for wireless communication provided by the embodiment of the present disclosure, when the terminal device performs verification based on the second identifier, the UE policy corresponding to the first identifier can be obtained, which can not only realize user granularity verification and UE policy update, but also effectively utilize the verification procedure, thereby improving the communication efficiency of the communication system.

In some embodiments, the UE policy update may be combined with registration. As an example, as shown in FIG. 6, the method may include operation S640: the third network element triggers the UCU procedure to configure the UE policy to the terminal device according to the first identifier obtained from the first network element. That is, in the UCU process, the UE policy (such as the URSP policy) corresponding to the first identifier of the third network element is included in a policy container (UE policy container) of the terminal device and forwarded to the terminal device via the first network element.

It should be noted that operation S640 may be a procedure initiated by the third network element alone, and may not be in sequence with other operations in FIG. 6.

In the method for wireless communication provided by the embodiment of the present disclosure, when the terminal device performs initial registration based on the first identifier, the UE policy corresponding to the first identifier can be obtained, which can not only realize initial registration of user granularity and UE policy update, but also effectively utilize the initial registration procedure, thereby improving the communication efficiency of the communication system.

By implementing the embodiment of the present disclosure, it is possible to realize verification when different users are logged in on the same terminal (UE/USIM), and distinguish the user identifiers of different users. In addition, the embodiment of the present disclosure can also use the existing verification mechanism, and the 5G network can recognize the User ID through the participation of the 5G network. In addition, the embodiment of the present disclosure can make full use of the existing procedure and mechanism, and the influence on the existing architecture can be controlled.

The method embodiments of the present disclosure are described in detail above with reference to FIGS. 1 to 10, and device embodiments of the present disclosure will be described in detail below with reference to FIGS. 11 to 16. It should be understood that the description of the method embodiments and the description of the device embodiments correspond to each other, and therefore, the portions not described in detail can be referred to the foregoing method embodiments.

FIG. 11 is a schematic diagram of a terminal device according to an embodiment of the present disclosure, and the terminal device 1100 illustrated in FIG. 11 includes a sending unit 1110.

The sending unit 1110 is configured to send a first message to a first network element, the first message including a first identifier, an identifier of the terminal device corresponding to one or more user identifiers, and the first identifier being one of the one or more user identifiers.

In some implementations, the first message is used to authenticate the first identifier.

In some implementations, the first message is a first registration request message.

In some implementations, the first message is a response message to an authentication request message from the first network element.

In some implementations, the authentication request message is a first registration reply message.

In some implementations, the first message further includes authentication information of the first identifier.

In some implementations, the authentication information includes one or more of: a username, a password, a first key determined based on biometric information of a user of the terminal device, or an authentication parameter generated based on the first key.

In some implementations, the terminal device 1100 further includes: a receiving unit, configured to receive a second message from the first network element, the second message including one or more of: a second identifier, the second identifier being an identifier used after the first identifier is successfully authenticated; or an authentication result indicating that the authentication of the first identifier is successful or failed.

In some implementations, the second message is a first registration reply message.

In some implementations, the sending unit 1110 is further configured to send a third message to the first network element, the third message being used to verify the second identifier.

In some implementations, the third message is triggered based on one or more of: switching from a third identifier to the first identifier, the third identifier being one of the one or more user identifiers; a user corresponding to the first identifier not using the terminal device within a first duration; the terminal device initiating a periodic registration update; or a network device indicating that the terminal device sends the second identifier.

In some implementations, the periodic registration update includes one or more of: a periodic registration update for the identifier of the terminal device; or a periodic registration update for the first identifier.

In some implementations, the second identifier includes the first identifier. Alternatively, the second identifier does not include the first identifier, and the third message includes the first identifier.

In some implementations, the third message is a second registration request message.

In some implementations, the receiving unit is further configured to receive a fourth message from the first network element, the fourth message including a verification result of the second identifier.

In some implementations, the fourth message is a second registration reply message.

In some implementations, the first message is used to request that the policy of the terminal device be updated to the policy corresponding to the first identifier.

In some implementations, the first message includes a policy container of the terminal device, and the first identifier is carried in the policy container.

In some implementations, the first message is further used to verify the second identifier, the second identifier being an identifier used after the first identifier is successfully authenticated.

In some implementations, the receiving unit is further configured to receive a fifth message from the first network element, the fifth message being used to update a policy of the terminal device to a policy corresponding to the first identifier.

In some implementations, the first network element is an AMF network element.

In some implementations, the identifier of the terminal device is an IMSI, a SUPI, or an identifier determined based on the SUPI.

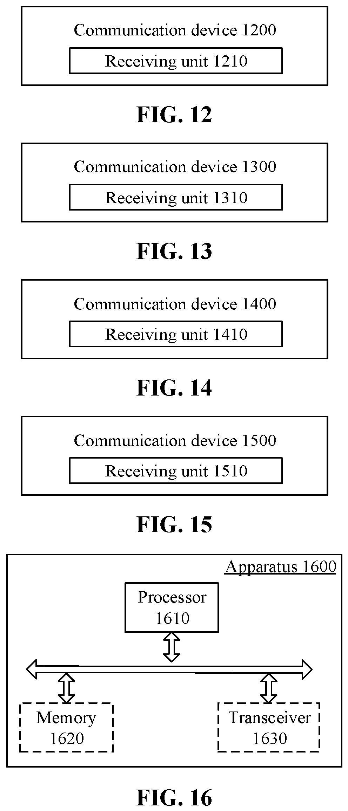

FIG. 12 is a schematic structural diagram of a communication device according to an embodiment of the present disclosure, where the communication device is a first network element. The communication device 1200 shown in FIG. 12 includes a receiving unit 1210, which is configured to receive a first message from a terminal device, the first message including a first identifier, an identifier of the terminal device corresponding to one or more user identifiers, and the first identifier being one of the one or more user identifiers.

In some implementations, the first message is used to authenticate the first identifier.

In some implementations, the first message is a first registration request message.

In some implementations, the first message is a response message to an authentication request message from the first network element.

In some implementations, the authentication request message is a first registration reply message.

In some implementations, the first message further includes authentication information of the first identifier.

In some implementations, the authentication information includes one or more of: a username, a password, a first key determined based on biometric information of a user of the terminal device, or an authentication parameter generated based on the first key.

In some implementations, the communication device further includes: a sending unit, configured to send a second message to the terminal device, the second message including one or more of: a second identifier, the second identifier being an identifier used after the first identifier is successfully authenticated; or an authentication result indicating that the authentication of the first identifier is successful or failed.

In some implementations, the second message is a first registration reply message.

In some implementations, the receiving unit 1210 is further configured to receive a third message from the terminal device, the third message being used to verify the second identifier.

In some implementations, the third message is triggered based on one or more of: switching from a third identifier to the first identifier, the third identifier being one of the one or more user identifiers; a user corresponding to the first identifier not using the terminal device within a first duration; the terminal device initiating a periodic registration update; or a network device indicating that the terminal device sends the second identifier.

In some implementations, the periodic registration update includes one or more of: a periodic registration update for the identifier of the terminal device; or a periodic registration update for the first identifier.

In some implementations, the second identifier includes the first identifier. Alternatively, the second identifier does not include the first identifier, and the third message includes the first identifier.

In some implementations, the third message is a second registration request message.

In some implementations, the sending unit is further configured to send a fourth message to the terminal device, the fourth message including a verification result of the second identifier.

In some implementations, the fourth message is a second registration reply message.

In some implementations, the first message is used to request that the policy of the terminal device be updated to the policy corresponding to the first identifier.

In some implementations, the first message includes a policy container of the terminal device, and the first identifier is carried in the policy container.

In some implementations, the first message is further used to verify the second identifier, the second identifier being an identifier used after the first identifier is successfully authenticated.

In some implementations, the sending unit is further configured to send a fifth message to the terminal device, the fifth message being used to update a policy of the terminal device to a policy corresponding to the first identifier.

In some implementations, the sending unit is further configured to send a sixth message to a second network element, the sixth message being used to request the second network element to authenticate the first identifier; and/or the receiving unit 1210 is further configured to receive a reply message to the sixth message from the second network element, the reply message to the sixth message including one or more of: a second identifier, the second identifier being an identifier used after the first identifier is successfully authenticated; or an authentication result indicating that authentication of the first identifier is successful or failed.

In some implementations, the second network element is a network element of a core network, or the second network element is an authentication server communicatively connected to the core network.

In some implementations, the sending unit is further configured to send a seventh message to a third network element, the seventh message being used to determine a policy corresponding to the first identifier.

In some implementations, the seventh message includes the first identifier after authentication, and the receiving unit 1210 is further configured to receive a reply message to the seventh message from the third network element, the reply message to the seventh message including the policy corresponding to the first identifier.

In some implementations, the seventh message includes the identifier of the terminal device after authentication, and the receiving unit 1210 is further configured to: receive a reply message to the seventh message from the third network element, the reply message to the seventh message including policies corresponding to the one or more user identifiers; and after the first identifier is successfully authenticated, determine the policy corresponding to the first identifier from the policies corresponding to the one or more user identifiers.

In some implementations, the third network element is a PCF network element.

In some implementations, the sending unit is further configured to send an eighth message to a fourth network element, the eighth message being used to determine subscription information corresponding to the first identifier.

In some implementations, the eighth message includes the first identifier after authentication, and the receiving unit 1210 is further configured to receive a reply message to the eighth message from the fourth network element, the reply message to the eighth message including subscription information corresponding to the first identifier.

In some implementations, the eighth message includes the identifier of the terminal device after authentication, and the receiving unit 1210 is further configured to: receive a reply message to the eighth message from the fourth network element, the reply message to the eighth message including subscription information corresponding to the one or more user identifiers; and after the first identifier is successfully authenticated, determine the subscription information corresponding to the first identifier from the subscription information corresponding to the one or more user identifiers.

In some implementations, the fourth network element is a UDM network element.

In some implementations, the first network element is an AMF network element.

In some implementations, the identifier of the terminal device is an IMSI, a SUPI, or an identifier determined based on the SUPI.

FIG. 13 is a schematic structural diagram of a communication device according to an embodiment of the present disclosure, where the communication device is a second network element. The communication device 1300 shown in FIG. 13 includes a receiving unit 1310, which is configured to receive a sixth message from a first network element, the sixth message being used to request the second network element to authenticate a first identifier, and the first identifier being one of one or more user identifiers corresponding to an identifier of the terminal device.

In some implementations, the communication device 1300 further includes a sending unit, which is configured to send a reply message to the sixth message to the first network element, the reply message to the sixth message including one or more of: a second identifier, the second identifier being an identifier used after the first identifier is successfully authenticated; or an authentication result indicating that authentication of the first identifier is successful or failed.

In some implementations, the second network element is a network element of a core network, or the second network element is an authentication server communicatively connected to the core network.

In some implementations, the first network element is an AMF network element.

In some implementations, the identifier of the terminal device is an IMSI, a SUPI, or an identifier determined based on the SUPI.

FIG. 14 is a schematic structural diagram of a communication device according to an embodiment of the present disclosure, where the communication device is a third network element. The communication device 1400 shown in FIG. 14 includes a receiving unit 1410, which is configured to receive a seventh message from a first network element, the seventh message being used to determine a policy corresponding to a first identifier, an identifier of the terminal device corresponding to one or more user identifiers, and the first identifier being one of the one or more user identifiers.

In some implementations, the seventh message includes the authenticated first identifier, and the communication device further includes:

a sending unit, configured to send a reply message to the seventh message to the first network element, the reply message to the seventh message including the policy corresponding to the first identifier.

In some implementations, the seventh message includes the identifier of the terminal device after authentication, and the communication device further includes: a sending unit, configured to send a reply message to the seventh message to the first network element, the reply message to the seventh message including the policies corresponding to the one or more user identifiers; and after the first identifier is successfully authenticated, determining, by the first network element, the policy corresponding to the first identifier from the policies corresponding to the one or more user identifiers.

In some implementations, the third network element is a PCF network element.

In some implementations, the first network element is an AMF network element.

In some implementations, the identifier of the terminal device is an IMSI, a SUPI, or an identifier determined based on the SUPI.

FIG. 15 is a schematic structural diagram of a communication device according to an embodiment of the present disclosure, where the communication device is a fourth network element. The communication device 1500 shown in FIG. 15 includes a receiving unit 1510, which is configured to receive an eighth message from a first network element, the eighth message being used to determine subscription information corresponding to a first identifier, an identifier of the terminal device corresponding to one or more user identifiers, and the first identifier being one of the one or more user identifiers.

In some implementations, the eighth message includes the authenticated first identifier, and the communication device further includes: a sending unit, configured to send a reply message to the eighth message to the first network element, the reply message to the eighth message including subscription information corresponding to the first identifier.

In some implementations, the eighth message includes the identifier of the terminal device after authentication, and the sending unit is further configured to send a reply message to the eighth message to the first network element, the reply message to the eighth message including subscription information corresponding to the one or more user identifiers.

In some implementations, the fourth network element is a UDM network element.

In some implementations, the first network element is an AMF network element.

In some implementations, the identifier of the terminal device is an IMSI, a SUPI, or an identifier determined based on the SUPI.

FIG. 16 is a schematic structural diagram of a communication device according to an embodiment of the present disclosure. The dashed line in FIG. 16 indicates that the unit or module is optional. The apparatus 1600 may be used to implement the method described in the above method embodiments. The apparatus 1600 may be a chip, a terminal, or a network device.

The apparatus 1600 may include one or more processors 1610. The processor 1610 may support the apparatus 1600 to implement the methods described in the previous method embodiments. The processor 1610 may be a general-purpose processor or a dedicated processor. For example, the processor may be a central processing unit (CPU). Alternatively, the processor may also be another general-purpose processor, a digital signal processor (DSP), an application specific integrated circuit (ASIC), a field programmable gate array (FPGA), or other programmable logic device, a discrete gate or transistor logic device, a discrete hardware component, or the like. The general purpose processor may be a microprocessor, or the processor may be any conventional processor, etc.

The apparatus 1600 may also include one or more memories 1620. The memory 1620 has stored a program that can be executed by the processor 1610 to cause the processor 1610 to perform the method described in the above method embodiments. The memory 1620 may be independent of the processor 1610 or may be integrated in the processor 1610.

The apparatus 1600 may also include a transceiver 1630. The processor 1610 may communicate with other devices or chips through the transceiver 1630. For example, the processor 1610 may transmit and receive data with other devices or chips through the transceiver 1630.

The embodiment of the present disclosure also provides a computer-readable storage medium for storing a program. The computer-readable storage medium can be applied to a terminal or a network device provided by the embodiments of the present disclosure, and the program causes a computer to perform the method performed by the terminal or the network device in each embodiment of the present disclosure.

The embodiments of the present disclosure also provide a computer program product. The computer program product includes a program. The computer program product can be applied to a terminal or a network device provided by the embodiments of the present disclosure, and the program causes a computer to perform the method performed by the terminal or the network device in each embodiment of the present disclosure.

The embodiments of the present disclosure also provide a computer program. The computer program can be applied to a terminal or a network device provided by the embodiments of the present disclosure, and the computer program causes a computer to perform the method performed by the terminal or the network device in each embodiment of the present disclosure.

It is to be understood that the terms "service" and "application" may be used interchangeably in the present disclosure. In addition, the term "terminal" used in the present disclosure may include one USIM card or multiple USIM cards. In the present disclosure, the terminal may include one UE function or multiple UE functions to access different networks, respectively.

It is to be understood that the terms "system" and "network" may be used interchangeably in the present disclosure. In addition, the terminology used in the present disclosure is for explanation of specific embodiments of the present disclosure only, and is not intended to limit the present disclosure. The terms "first", "second", "third", and "fourth", etc. in the specification and claims of the present disclosure and the drawings are used to distinguish different objects, and are not used to describe a specific order. Furthermore, the terms "comprising" and "having" and any variations thereof are intended to cover non-exclusive inclusions.

In the embodiments of the present disclosure, the "indication" mentioned may be a direct indication, an indirect indication, or an associated relationship. For example, A indicates B, which may mean that A directly indicates B, for example, B can be acquired by A. It may also mean that A indicates B indirectly, for example, A indicates C, and B can be acquired through C. It may also be indicated that there is an association relationship between A and B.

In the embodiments of the present disclosure, "B corresponding to A" means that B is associated with A, and B can be determined from A. However, it should also be understood that determining B from A does not mean that B is determined from A alone, and that B may also be determined from A and/or other information.

In the embodiments of the present disclosure, the term "correspondence" may indicate that there is a direct correspondence or indirect correspondence relationship between the two, may indicate that there is a correlation relationship between the two, or may indicate a relationship between indicating and being indicated, configuring and being configured, or the like.

In the embodiments of the present disclosure, "predefined" or "pre-configured" may be realized by storing corresponding codes, tables, or other manners that can be used to indicate relevant information in a device (including, for example, a terminal device and a network device) in advance, and the present disclosure does not limit the specific implementation method thereof. For example, predefined may refer to defined in the protocol.

In the embodiment of the present disclosure, the "protocol" may refer to a standard protocol in the communication field, and may include, for example, an LTE protocol, an NR protocol, and related protocols applied to future communication systems, and the present disclosure is not limited thereto.

The term "and/or" in the embodiments of the present disclosure is only an association relationship describing an association object, and indicates that there may be three kinds of relationships, for example, A and/or B, which may indicate that A exists alone, A and B exist simultaneously, and B exists alone. In addition, the character "/" in the present disclosure generally indicates that there is "or" relationship between objects associated before and after.

In the various embodiments of the disclosure, the size of the serial number of the above-mentioned processes does not mean the order of execution, and the execution order of each process should be determined by its function and internal logic, and should not constitute any limitation to the implementation process of the embodiments of the disclosure.

In several embodiments provided herein, it should be appreciated that the disclosed systems, devices, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over multiple network units. Some or all of the units may be selected according to actual needs to achieve the purpose of the solution of the embodiments.

In addition, each functional unit in each embodiment of the present disclosure may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general-purpose computer, a dedicated computer, a computer network, or other programmable device. The computer instructions may be stored in a computer-readable storage medium or transmitted from one computer-readable storage medium to another computer-readable storage medium. For example, the computer instructions may be transmitted from one website site, computer, server or data center by wired (e.g. coaxial cable, optical fiber, digital subscriber line (DSL)) or wireless (e.g. infrared, wireless, microwave, etc.) means to another website site, computer, server or data center. The computer-readable storage medium may be any available medium that can be read by a computer or a data storage device such as a server, a data center, or the like that incorporates one or more available media integrations. The available media may be magnetic media (e.g., a floppy disk, a hard disk, a magnetic tape), optical media (e.g., digital video disc (DVD)), or semiconductor media (e.g., solid state disk (SSD)), etc.

The above descriptions are only specific implementations of the disclosure, however, the scope of protection of the disclosure is not limited thereto. Variation or replacement easily conceived by any technician familiar with this technical field within the technical scope disclosed in the disclosure, should fall within the scope of protection of the disclosure. Therefore, the scope of protection of the disclosure should be subject to the scope of protection of the claims.

## Claims

1. A method for wireless communication, comprising:
sending, by a terminal device, a first message to a first network element, the first message comprising a first identifier, an identifier of the terminal device corresponding to one or more user identifiers, and the first identifier being one of the one or more user identifiers.

2. The method of claim 1, wherein the first message is used to authenticate the first identifier.

3. The method of claim 2, wherein the first message is a first registration request message.

4. The method of claim 2, wherein the first message is a response message to an authentication request message from the first network element.

5. The method of claim 4, wherein the authentication request message is a first registration reply message.

6. The method of any one of claims 2 to 5, wherein the first message further comprises authentication information of the first identifier.

7. The method of claim 6, wherein the authentication information comprises one or more of:
a username;
a password;
a first key determined based on biometric information of a user of the terminal device; or
an authentication parameter generated based on the first key.

8. The method of any one of claims 2 to 7, further comprising:
receiving, by the terminal device, a second message from the first network element, the second message comprising one or more of:
a second identifier, the second identifier being an identifier used after the first identifier is successfully authenticated; or
an authentication result indicating that authentication of the first identifier is successful or failed.

9. The method of claim 8, wherein the second message is a first registration reply message.

10. The method of claim 8 or 9, further comprising:
sending, by the terminal device, a third message to the first network element, the third message being used to verify the second identifier.

11. The method of claim 10, wherein the third message is triggered based on one or more of:
switching from a third identifier to the first identifier, the third identifier being one of the one or more user identifiers;
a user corresponding to the first identifier not using the terminal device within a first duration;
the terminal device initiating a periodic registration update; or
a network device indicating that the terminal device sends the second identifier.

12. The method of claim 11, wherein the periodic registration update comprises one or more of:
a periodic registration update for the identifier of the terminal device; or
a periodic registration update for the first identifier.

13. The method of any one of claims 10 to 12, wherein
the second identifier comprises the first identifier; or
the second identifier does not comprise the first identifier, and the third message comprises the first identifier.

14. The method of any one of claims 10 to 13, wherein the third message is a second registration request message.

15. The method of any one of claims 10 to 14, further comprising:
receiving, by the terminal device, a fourth message from the first network element, the fourth message comprising a verification result of the second identifier.

16. The method of claim 15, wherein the fourth message is a second registration reply message.

17. The method of any one of claims 1 to 16, wherein the first message is used to request that a policy of the terminal device be updated to a policy corresponding to the first identifier.

18. The method of any one of claims 1 to 17, wherein the first message comprises a policy container of the terminal device, and the first identifier is carried in the policy container.

19. The method of claim 17 or 18, wherein the first message is further used to verify a second identifier, and the second identifier is an identifier used after the first identifier is successfully authenticated.

20. The method of any one of claims 1 to 19, further comprising:
receiving, by the terminal device, a fifth message from the first network element, the fifth message being used to update a policy of the terminal device to a policy corresponding to the first identifier.

21. The method of any one of claims 1 to 20, wherein the first network element is an access and mobility management function (AMF) network element.

22. The method of any one of claims 1 to 21, wherein the identifier of the terminal device is an international mobile subscriber identity (IMSI), a subscription permanent identifier (SUPI), or an identifier determined based on the SUPI.

23. A method for wireless communication, comprising:
receiving, by a first network element, a first message from a terminal device, the first message comprising a first identifier, an identifier of the terminal device corresponding to one or more user identifiers, and the first identifier being one of the one or more user identifiers.

24. The method of claim 23, wherein the first message is used to authenticate the first identifier.

25. The method of claim 24, wherein the first message is a first registration request message.

26. The method of claim 24, wherein the first message is a response message to an authentication request message from the first network element.

27. The method of claim 26, wherein the authentication request message is a first registration reply message.

28. The method of any one of claims 24 to 27, wherein the first message further comprises authentication information of the first identifier.

29. The method of claim 28, wherein the authentication information comprises one or more of:
a username;
a password;
a first key determined based on biometric information of a user of the terminal device; or
an authentication parameter generated based on the first key.

30. The method of any one of claims 24 to 29, further comprising:
sending, by the first network element, a second message to the terminal device, the second message comprising one or more of:
a second identifier, the second identifier being an identifier used after the first identifier is successfully authenticated; or
an authentication result indicating that authentication of the first identifier is successful or failed.

31. The method of claim 30, wherein the second message is a first registration reply message.

32. The method of claim 30 or 31, further comprising:
receiving, by the first network element, a third message from the terminal device, the third message being used to verify the second identifier.

33. The method of claim 32, wherein the third message is triggered based on one or more of:
switching from a third identifier to the first identifier, the third identifier being one of the one or more user identifiers;
a user corresponding to the first identifier not using the terminal device within a first duration;
the terminal device initiating a periodic registration update; or
a network device indicating that the terminal device sends the second identifier.

34. The method of claim 33, wherein the periodic registration update comprises one or more of:
a periodic registration update for the identifier of the terminal device; or
a periodic registration update for the first identifier.

35. The method of any one of claims 32 to 34, wherein
the second identifier comprises the first identifier; or
the second identifier does not comprise the first identifier, and the third message comprises the first identifier.

36. The method of any one of claims 32 to 35, wherein the third message is a second registration request message.

37. The method of any one of claims 32 to 36, further comprising:
sending, by the first network element, a fourth message to the terminal device, the fourth message comprising a verification result of the second identifier.

38. The method of claim 37, wherein the fourth message is a second registration reply message.

39. The method of any one of claims 23 to 38, wherein the first message is used to request that a policy of the terminal device be updated to a policy corresponding to the first identifier.

40. The method of any one of claims 23 to 39, wherein the first message comprises a policy container of the terminal device, and the first identifier is carried in the policy container.

41. The method of claim 39 or 40, wherein the first message is further used to verify a second identifier, and the second identifier is an identifier used after the first identifier is successfully authenticated.

42. The method of any one of claims 23 to 41, further comprising:
sending, by the first network element, a fifth message to the terminal device, the fifth message being used to update a policy of the terminal device to a policy corresponding to the first identifier.

43. The method of any one of claims 23 to 42, further comprising at least one of:
sending, by the first network element, a sixth message to a second network element, the sixth message being used to request the second network element to authenticate the first identifier; or
receiving, by the first network element, a reply message to the sixth message from the second network element, the reply message to the sixth message comprising one or more of:
a second identifier, the second identifier being an identifier used after the first identifier is successfully authenticated; or
an authentication result indicating that authentication of the first identifier is successful or failed.

44. The method of claim 43, wherein the second network element is a network element of a core network, or the second network element is an authentication server communicatively connected to the core network.

45. The method of any one of claims 23 to 44, further comprising:
sending, by the first network element, a seventh message to a third network element, the seventh message being used to determine a policy corresponding to the first identifier.

46. The method of claim 45, wherein the seventh message comprises the first identifier after authentication, and the method further comprises:
receiving, by the first network element, a reply message to the seventh message from the third network element, the reply message to the seventh message comprising the policy corresponding to the first identifier.

47. The method of claim 45, wherein the seventh message comprises the identifier of the terminal device after authentication, and the method further comprises:
receiving, by the first network element, a reply message to the seventh message from the third network element, the reply message to the seventh message comprising policies corresponding to the one or more user identifiers; and
after the first identifier is successfully authenticated, determining, by the first network element, the policy corresponding to the first identifier from the policies corresponding to the one or more user identifiers.

48. The method of any one of claims 45 to 47, wherein the third network element is a policy control function (PCF) network element.

49. The method of any one of claims 23 to 48, further comprising:
sending, by the first network element, an eighth message to a fourth network element, the eighth message being used to determine subscription information corresponding to the first identifier.

50. The method of claim 49, wherein the eighth message comprises the first identifier after authentication, and the method further comprises:
receiving, by the first network element, a reply message to the eighth message from the fourth network element, the reply message to the eighth message comprising subscription information corresponding to the first identifier.

51. The method of claim 49, wherein the eighth message comprises the identifier of the terminal device after authentication, and the method further comprises:
receiving, by the first network element, a reply message to the eighth message from the fourth network element, the reply message to the eighth message comprising subscription information corresponding to the one or more user identifiers; and
after the first identifier is successfully authenticated, determining, by the first network element, the subscription information corresponding to the first identifier from the subscription information corresponding to the one or more user identifiers.

52. The method of any one of claims 49 to 51, wherein the fourth network element is a unified data management (UDM) network element.

53. The method of any one of claims 23 to 52, wherein the first network element is an access and mobility management function (AMF) network element.

54. The method of any one of claims 23 to 53, wherein the identifier of the terminal device is an international mobile subscriber identity (IMSI), a subscription permanent identifier (SUPI), or an identifier determined based on the SUPI.

55. A method for wireless communication, comprising:
receiving, by a second network element, a sixth message from a first network element, the sixth message being used to request the second network element to authenticate a first identifier, and the first identifier being one of one or more user identifiers corresponding to an identifier of the terminal device.

56. The method of claim 55, further comprising:
sending, by the second network element, a reply message to the sixth message to the first network element, the reply message to the sixth message comprising one or more of:
a second identifier, the second identifier being an identifier used after the first identifier is successfully authenticated; or
an authentication result indicating that authentication of the first identifier is successful or failed.

57. The method of claim 55 or 56, wherein the second network element is a network element of a core network, or the second network element is an authentication server communicatively connected to the core network.

58. The method of any one of claims 55 to 57, wherein the first network element is an access and mobility management function (AMF) network element.

59. The method of any one of claims 55 to 58, wherein the identifier of the terminal device is an international mobile subscriber identity (IMSI), a subscription permanent identifier (SUPI), or an identifier determined based on the SUPI.

60. A method for wireless communication, comprising:
receiving, by a third network element, a seventh message from a first network element, the seventh message being used to determine a policy corresponding to a first identifier, an identifier of the terminal device corresponding to one or more user identifiers, and the first identifier being one of the one or more user identifiers.

61. The method of claim 60, wherein the seventh message comprises the first identifier after authentication, and the method further comprises:
sending, by the third network element, a reply message to the seventh message to the first network element, the reply message to the seventh message comprising the policy corresponding to the first identifier.

62. The method of claim 60, wherein the seventh message comprises the identifier of the terminal device after authentication, and the method further comprises:
receiving, by the first network element, a reply message to the seventh message from the third network element, the reply message to the seventh message comprising policies corresponding to the one or more user identifiers; and
after the first identifier is successfully authenticated, determining, by the first network element, the policy corresponding to the first identifier from the policies corresponding to the one or more user identifiers.

63. The method of any one of claims 60 to 62, wherein the third network element is a policy control function (PCF) network element.

64. The method of any one of claims 60 to 63, wherein the first network element is an access and mobility management function (AMF) network element.

65. The method of any one of claims 60 to 64, wherein the identifier of the terminal device is a subscription permanent identifier (SUPI), or an identifier determined based on the SUPI.

66. A method for wireless communication, further comprising:
receiving, by a fourth network element, an eighth message from a first network element, the eighth message being used to determine subscription information corresponding to a first identifier, an identifier of the terminal device corresponding to one or more user identifiers, and the first identifier being one of the one or more user identifiers.

67. The method of claim 66, wherein the eighth message comprises the first identifier after authentication, and the method further comprises:
sending, by the fourth network element, a reply message to the eighth message to the first network element, the reply message to the eighth message comprising subscription information corresponding to the first identifier.

68. The method of claim 66, wherein the eighth message comprises the identifier of the terminal device after authentication, and the method further comprises:
sending, by the fourth network element, a reply message to the eighth message to the first network element, the reply message to the eighth message comprising subscription information corresponding to the one or more user identifiers.

69. The method of any one of claims 66 to 68, wherein the fourth network element is a unified data management (UDM) network element.

70. The method of any one of claims 66 to 69, wherein the first network element is an access and mobility management function (AMF) network element.

71. The method of any one of claims 66 to 70, wherein the identifier of the terminal device is a subscription permanent identifier (SUPI), or an identifier determined based on the SUPI.

72. A terminal device, comprising:
a sending unit, configured to send a first message to a first network element, the first message comprising a first identifier, an identifier of the terminal device corresponding to one or more user identifiers, and the first identifier being one of the one or more user identifiers.

73. The terminal device of claim 72, wherein the first message is used to authenticate the first identifier.

74. The terminal device of claim 73, wherein the first message is a first registration request message.

75. The terminal device of claim 73, wherein the first message is a response message to an authentication request message from the first network element.

76. The terminal device of claim 75, wherein the authentication request message is a first registration reply message.

77. The terminal device of any one of claims 73 to 76, wherein the first message further comprises authentication information of the first identifier.

78. The terminal device of claim 77, wherein the authentication information comprises one or more of:
a username;
a password;
a first key determined based on biometric information of a user of the terminal device; or
an authentication parameter generated based on the first key.

79. The terminal device of any one of claims 73 to 78, further comprising:
a receiving unit, configured to receive a second message from the first network element, the second message comprising one or more of:
a second identifier, the second identifier being an identifier used after the first identifier is successfully authenticated; or
an authentication result indicating that authentication of the first identifier is successful or failed.

80. The terminal device of claim 79, wherein the second message is a first registration reply message.

81. The terminal device of claim 79 or 80, wherein the sending unit is further configured to:
send a third message to the first network element, the third message being used to verify the second identifier.

82. The terminal device of claim 81, wherein the third message is triggered based on one or more of:
switching from a third identifier to the first identifier, the third identifier being one of the one or more user identifiers;
a user corresponding to the first identifier not using the terminal device within a first duration;
the terminal device initiating a periodic registration update; or
a network device indicating that the terminal device sends the second identifier.

83. The terminal device of claim 82, wherein the periodic registration update comprises one or more of:
a periodic registration update for the identifier of the terminal device; or
a periodic registration update for the first identifier.

84. The terminal device of any one of claims 81 to 83, wherein
the second identifier comprises the first identifier; or
the second identifier does not comprise the first identifier, and the third message comprises the first identifier.

85. The terminal device of any one of claims 81 to 84, wherein the third message is a second registration request message.

86. The terminal device of any one of claims 81 to 85, wherein the receiving unit is further configured to:
receive a fourth message from the first network element, the fourth message comprising a verification result of the second identifier.

87. The terminal device of claim 86, wherein the fourth message is a second registration reply message.

88. The terminal device of any one of claims 72 to 87, wherein the first message is used to request that a policy of the terminal device be updated to a policy corresponding to the first identifier.

89. The terminal device of any one of claims 72 to 88, wherein the first message comprises a policy container of the terminal device, and the first identifier is carried in the policy container.

90. The terminal device of claim 88 or 89, wherein the first message is further used to verify a second identifier, and the second identifier is an identifier used after the first identifier is successfully authenticated.

91. The terminal device of any one of claims 72 to 90, wherein the receiving unit is further configured to:
receive a fifth message from the first network element, the fifth message being used to update a policy of the terminal device to a policy corresponding to the first identifier.

92. The terminal device of any one of claims 72 to 91, wherein the first network element is an access and mobility management function (AMF) network element.

93. The terminal device of any one of claims 72 to 92, wherein the identifier of the terminal device is an international mobile subscriber identity (IMSI), a subscription permanent identifier (SUPI), or an identifier determined based on the SUPI.

94. A communication device, wherein the communication device is a first network element, and the communication device comprises:
a receiving unit, configured to receive a first message from a terminal device, the first message comprising a first identifier, an identifier of the terminal device corresponding to one or more user identifiers, and the first identifier being one of the one or more user identifiers.

95. The communication device of claim 94, wherein the first message is used to authenticate the first identifier.

96. The communication device of claim 95, wherein the first message is a first registration request message.

97. The communication device of claim 95, wherein the first message is a response message to an authentication request message from the first network element.

98. The communication device of claim 97, wherein the authentication request message is a first registration reply message.

99. The communication device of any one of claims 95 to 98, wherein the first message further comprises authentication information of the first identifier.

100. The communication device of claim 99, wherein the authentication information comprises one or more of:
a username;
a password; or
a first key determined based on biometric information of a user of the terminal device.

101. The communication device of any one of claims 95 to 100, further comprising:
a sending unit, configured to send a second message to the terminal device, the second message comprising one or more of:
a second identifier, the second identifier being an identifier used after the first identifier is successfully authenticated; or
an authentication result indicating that authentication of the first identifier is successful or failed.

102. The communication device of claim 101, wherein the second message is a first registration reply message.

103. The communication device of claim 101 or 102, wherein the receiving unit is further configured to:
receive a third message from the terminal device, the third message being used to verify the second identifier.

104. The communication device of claim 103, wherein the third message is triggered based on one or more of:
switching from a third identifier to the first identifier, the third identifier being one of the one or more user identifiers;
a user corresponding to the first identifier not using the terminal device within a first duration;
the terminal device initiating a periodic registration update; or
a network device indicating that the terminal device sends the second identifier.

105. The communication device of claim 104, wherein the periodic registration update comprises one or more of:
a periodic registration update for the identifier of the terminal device; or
a periodic registration update for the first identifier.

106. The communication device of any one of claims 103 to 105, wherein
the second identifier comprises the first identifier; or
the second identifier does not comprise the first identifier, and the third message comprises the first identifier.

107. The communication device of any one of claims 103 to 106, wherein the third message is a second registration request message.

108. The communication device of any one of claims 103 to 107, wherein the sending unit is further configured to:
send a fourth message to the terminal device, the fourth message comprising a verification result of the second identifier.

109. The communication device of claim 108, wherein the fourth message is a second registration reply message.

110. The communication device of any one of claims 94 to 109, wherein the first message is used to request that a policy of the terminal device be updated to a policy corresponding to the first identifier.

111. The communication device of any one of claims 94 to 110, wherein the first message comprises a policy container of the terminal device, and the first identifier is carried in the policy container.

112. The communication device of claim 110 or 111, wherein the first message is further used to verify a second identifier, and the second identifier is an identifier used after the first identifier is successfully authenticated.

113. The communication device of any one of claims 94 to 112, wherein the sending unit is further configured to:
send a fifth message to the terminal device, the fifth message being used to update a policy of the terminal device to a policy corresponding to the first identifier.

114. The communication device of any one of claims 94 to 113, wherein the sending unit is further configured to send a sixth message to a second network element, the sixth message being configured to request the second network element to authenticate the first identifier; and/or
the receiving unit is further configured to receive a reply message to the sixth message from the second network element, the reply message to the sixth message comprising one or more of:
a second identifier, the second identifier being an identifier used after the first identifier is successfully authenticated; or
an authentication result indicating that authentication of the first identifier is successful or failed.

115. The communication device of claim 114, wherein the second network element is a network element of a core network, or the second network element is an authentication server communicatively connected to the core network.

116. The communication device of any one of claims 94 to 115, wherein the sending unit is further configured to:
send a seventh message to a third network element, the seventh message being used to determine a policy corresponding to the first identifier.

117. The communication device of claim 116, wherein the seventh message comprises the first identifier after authentication, and the receiving unit is further configured to:
receive a reply message to the seventh message from the third network element, the reply message to the seventh message comprising the policy corresponding to the first identifier.

118. The communication device of claim 116, wherein the seventh message comprises the identifier of the terminal device after authentication, and the receiving unit is further configured to:
receive a reply message to the seventh message from the third network element, the reply message to the seventh message comprising policies corresponding to the one or more user identifiers; and
after the first identifier is successfully authenticated, determine the policy corresponding to the first identifier from the policies corresponding to the one or more user identifiers.

119. The communication device of any one of claims 116 to 118, wherein the third network element is a policy control function (PCF) network element.

120. The communication device of any one of claims 94 to 119, wherein the sending unit is further configured to:
send an eighth message to a fourth network element, the eighth message being used to determine subscription information corresponding to the first identifier.

121. The communication device of claim 120, wherein the eighth message comprises the first identifier after authentication, and the receiving unit is further configured to:
receive a reply message to the eighth message from the fourth network element, the reply message to the eighth message comprising subscription information corresponding to the first identifier.

122. The communication device of claim 120, wherein the eighth message comprises the identifier of the terminal device after authentication, and the receiving unit is further configured to:
receive a reply message to the eighth message from the fourth network element, the reply message to the eighth message comprising subscription information corresponding to the one or more user identifiers; and
after the first identifier is successfully authenticated, determine the subscription information corresponding to the first identifier from the subscription information corresponding to the one or more user identifiers.

123. The communication device of any one of claims 120 to 122, wherein the fourth network element is a unified data management (UDM) network element.

124. The communication device of any one of claims 94 to 123, wherein the first network element is an access and mobility management function (AMF) network element.

125. The communication device of any one of claims 94 to 124, wherein the identifier of the terminal device is an international mobile subscriber identity (IMSI), a subscription permanent identifier (SUPI), or an identifier determined based on the SUPI.

126. A communication device, wherein the communication device is a second network element, and the communication device comprises:
a receiving unit, configured to receive a sixth message from a first network element, the sixth message being used to request the second network element to authenticate a first identifier, and the first identifier being one of one or more user identifiers corresponding to an identifier of the terminal device.

127. The communication device of claim 126, further comprising:
a sending unit, configured to send a reply message to the sixth message to the first network element, the reply message to the sixth message comprising one or more of:
a second identifier, the second identifier being an identifier used after the first identifier is successfully authenticated; or
an authentication result indicating that authentication of the first identifier is successful or failed.

128. The communication device of claim 126 or 127, wherein the second network element is a network element of a core network, or the second network element is an authentication server communicatively connected to the core network.

129. The communication device of any one of claims 126 to 128, wherein the first network element is an access and mobility management function (AMF) network element.

130. The communication device of any one of claims 126 to 129, wherein the identifier of the terminal device is an international mobile subscriber identity (IMSI), a subscription permanent identifier (SUPI), or an identifier determined based on the SUPI.

131. A communication device, wherein the communication device is a third network element, and the communication device comprises:
a receiving unit, configured to receive a seventh message from a first network element, the seventh message being used to determine a policy corresponding to a first identifier, an identifier of the terminal device corresponding to one or more user identifiers, and the first identifier being one of the one or more user identifiers.

132. The communication device of claim 131, wherein the seventh message comprises the first identifier after authentication, and the communication device further comprises:
a sending unit, configured to send a reply message to the seventh message to the first network element, the reply message to the seventh message comprising the policy corresponding to the first identifier.

133. The communication device of claim 131, wherein the seventh message comprises the identifier of the terminal device after authentication, and the communication device further comprises:
a sending unit, configured to send a reply message to the seventh message to the first network element, the reply message to the seventh message comprising the policies corresponding to the one or more user identifiers; and
after the first identifier is successfully authenticated, determining, by the first network element, the policy corresponding to the first identifier from the policies corresponding to the one or more user identifiers.

134. The communication device of any one of claims 131 to 133, wherein the third network element is a policy control function (PCF) network element.

135. The communication device of any one of claims 131 to 134, wherein the first network element is an access and mobility management function (AMF) network element.

136. The communication device of any one of claims 131 to 135, wherein the identifier of the terminal device is an international mobile subscriber identity (IMSI), a subscription permanent identifier (SUPI), or an identifier determined based on the SUPI.

137. A communication device, wherein the communication device is a fourth network element, and the communication device comprises:
a receiving unit, configured to receive an eighth message from a first network element, the eighth message being used to determine subscription information corresponding to a first identifier, an identifier of the terminal device corresponding to one or more user identifiers, and the first identifier being one of the one or more user identifiers.

138. The communication device of claim 137, wherein the eighth message comprises the first identifier after authentication, and the communication device further comprises:
a sending unit, configured to send a reply message to the eighth message to the first network element, the reply message to the eighth message comprising subscription information corresponding to the first identifier.

139. The communication device of claim 137, wherein the eighth message comprises the identifier of the terminal device after authentication, and the sending unit is further configured to send a reply message to the eighth message to the first network element, the reply message to the eighth message comprising subscription information corresponding to the one or more user identifiers.

140. The communication device of any one of claims 137 to 139, wherein the fourth network element is a unified data management (UDM) network element.

141. The communication device of any one of claims 137 to 140, wherein the first network element is an access and mobility management function (AMF) network element.

142. The communication device of any one of claims 137 to 141, wherein the identifier of the terminal device is an international mobile subscriber identity (IMSI), a subscription permanent identifier (SUPI), or an identifier determined based on the SUPI.

143. A communication device, comprising: a transceiver, a memory, and a processor, wherein the memory is configured to store a program, and the processor is configured to invoke the program in the memory and control the transceiver to receive or send signals, to cause the communication device to perform one of: the method of any one of claims 1-22, the method of any one of claims 23-54, the method of any one of claims 55-59, the method of any one of claims 60-65, or the method of any one of claims 66-71.

144. A chip, comprising: a processor for invoking a program in a memory to cause a device installed with the chip to perform one of: the method of any one of claims 1-22, the method of any one of claims 23-54, the method of any one of claims 55-59, the method of any one of claims 60-65, or the method of any one of claims 66-71.

145. A computer-readable storage medium having a program stored thereon, wherein the program causes a computer to perform one of: the method of any one of claims 1-22, the method of any one of claims 23-54, the method of any one of claims 55-59, the method of any one of claims 60-65, or the method of any one of claims 66-71.

146. A computer program product, comprising: a program causing a computer to perform one of: the method of any one of claims 1-22, the method of any one of claims 23-54, the method of any one of claims 55-59, the method of any one of claims 60-65, or the method of any one of claims 66-71.

147. A computer program causing a computer to perform one of: the method of any one of claims 1-22, the method of any one of claims 23-54, the method of any one of claims 55-59, the method of any one of claims 60-65, or the method of any one of claims 66-71.
